# EUROPEAN PATENT APPLICATION

(11) **EP 4 808 228 A1**
(43) Date of publication of application: **16.09.2026**
(21) Application number: 24896199.7
(22) Date of filing: 05.11.2024
(51) Int. Cl.: H04W 56/00

(54) **COMMUNICATION METHOD AND COMMUNICATION APPARATUS**

(30) Priority: 29.11.2023 CN 202311634986
(71) Applicant: Huawei Technologies Co., Ltd., Shenzhen, Guangdong 518129 (CN)
(72) Inventor: PAN, Qi, Shenzhen, Guangdong 518129 (CN); NI, Hui, Shenzhen, Guangdong 518129 (CN)
(74) Representative: Thun, Clemens
(86) International application number: PCT/CN2024/129823
(87) International publication number: WO 2025/113108

(57) **Abstract**

This application relates to a communication method and a communication apparatus. The method includes: An application function network element provides information for synchronous transmission on a multi-modal service flow; and a user plane function network element identifies, based on the information, associated PDU sets among the multi-modal service flow, and adds association information to GTP-U headers of the associated PDU sets, so that an access network device can determine the associated PDU sets and perform synchronous transmission on the associated PDU sets; or an access network device identifies, based on the information provided by the application function network element, associated PDU sets among the multi-modal service flow, and perform synchronous transmission on the associated PDU sets. This can ensure synchronous transmission among the multi-modal service flow.

## Description

This application claims priority to Chinese Patent Application No. 202311634986.3, filed with the China National Intellectual Property Administration on November 29, 2023 and entitled "COMMUNICATION METHOD AND COMMUNICATION APPARATUS", which is incorporated herein by reference in its entirety.

### TECHNICAL FIELD

This application relates to the communication field, and specifically, to a communication method and a communication apparatus.

### BACKGROUND

A multi-modal service is usually a service including a plurality of modal service flows. For example, a multi-modal service flow may be a service flow of different modes such as an audio stream, a video stream, a tactile stream, a temperature stream, and/or a luminance stream. For example, a common multimedia service may include an audio stream, a video stream, control data, and/or the like. To provide high-quality and consistent service experience, synchronous transmission needs to be ensured among the plurality of service flows of the multi-modal service.

Therefore, how to ensure synchronous transmission among the plurality of service flows of the multi-modal service becomes a problem that needs to be urgently resolved.

### SUMMARY

This application provides a communication method and a communication apparatus, to ensure synchronous transmission among a plurality of service flows of a multi-modal service.

According to a first aspect, a communication method is provided. The method may be performed by an access network device. Unless otherwise specified, the "access network device" may be the access network device itself, or may be an apparatus that can support the access network device in implementing a function of the access network device. For ease of description, the access network device is uniformly used for description below.

The method includes: The access network device obtains first indication information, where the first indication information indicates that a first service flow is associated with a second service flow; the access network device receives a first protocol data unit set (protocol data unit set, PDU set) of the first service flow and a second PDU set of the second service flow, where the first PDU set and/or the second PDU set carry/carries association information, and the association information is used by the access network device to determine that the first PDU set is associated with the second PDU set; and the access network device performs synchronous transmission on the first PDU set and the second PDU set based on the first indication information and the association information.

Based on the foregoing method, the access network device can determine, based on the first indication information and the association information carried in the first PDU set and/or the second PDU set, that the first PDU set of the first service flow is associated with the second PDU set of the second service flow, and perform synchronous transmission on associated PDU sets. This ensures synchronous transmission on a plurality of service flows.

With reference to the first aspect, in some implementations, the method further includes: The access network device obtains second indication information, where the second indication information indicates a requirement for synchronization between the first service flow and the second service flow; and that the access network device performs synchronous transmission on the first PDU set and the second PDU set based on the first indication information and the association information includes: the access network device performs synchronous transmission on the first PDU set and the second PDU set based on the first indication information, the association information, and the second indication information.

Optionally, the requirement for synchronization is from a core network side, for example, an application function network element, a session management function network element, or a policy control function network element.

Based on the foregoing implementation, the access network device can perform, based on the requirement for synchronization between the first service flow and the second service flow, transmission on the associated PDU sets between the first service flow and the second service flow. This helps ensure synchronous transmission among the plurality of service flows.

With reference to the first aspect or any implementation of the first aspect, in some other implementations, the requirement for synchronization includes a maximum value of a difference between transmission delays of associated PDU sets between the first service flow and the second service flow. Alternatively, the requirement for synchronization includes a requirement for an overall transmission delay of the associated PDU sets between the first service flow and the second service flow, for example, a requirement for a delay budget from receiving first data packets of the associated PDU sets to sending all the associated PDU sets.

Based on the foregoing implementation, the access network device can perform, based on the maximum value of the difference between the transmission delays of the associated PDU sets between the first service flow and the second service flow or the requirement for the overall transmission delay of the associated PDU sets between the first service flow and the second service flow, transmission on the associated PDU sets between the first service flow and the second service flow. This helps ensure synchronous transmission among the plurality of service flows.

With reference to the first aspect or any implementation of the first aspect, in some other implementations, that the access network device performs synchronous transmission on the first PDU set and the second PDU set based on the first indication information and the association information includes: The access network device determines, based on the first indication information, that the first service flow is associated with the second service flow; the access network device determines, based on the association information, that the first PDU set is associated with the second PDU set; and the access network device performs synchronous transmission on the first PDU set and the second PDU set that are associated.

With reference to the first aspect or any implementation of the first aspect, in some other implementations, that the first PDU set and/or the second PDU set carry/carries the association information includes: The first PDU set carries first association information, and the second PDU set carries second association information; and that the access network device determines, based on the association information, that the first PDU set is associated with the second PDU set includes: when the first association information is the same as the second association information, a difference between the first association information and the second association information falls within a threshold range, or a difference between the first association information and the second association information is less than or equal to a threshold, the access network device determines that the first PDU set is associated with the second PDU set.

Based on the foregoing implementation, the access network device can determine associated PDU sets among the plurality of service flows, and perform synchronous transmission on the associated PDU sets. This ensures synchronous transmission on the plurality of service flows.

With reference to the first aspect or any implementation of the first aspect, in some other implementations, the threshold is from a core network side, for example, an application function network element, a session management function network element, a policy control function network element, or a user plane function network element.

With reference to the first aspect or any implementation of the first aspect, in some other implementations, the association information indicates an offset value between identification information of the associated PDU sets between the first service flow and the second service flow; the first PDU set further carries first identification information, and the second PDU set further carries second identification information; and that the access network device determines, based on the association information, that the first PDU set is associated with the second PDU set includes: when a difference between the first identification information and the second identification information is equal to the offset value, the access network device determines that the first PDU set is associated with the second PDU set.

Based on the foregoing implementation, the access network device can receive, by using a user plane, the offset value between the identification information of the associated PDU sets between the first service flow and the second service flow. Compared with the offset value preconfigured by using the control plane, the obtained offset value can better comply with the current service flows. This helps ensure synchronous transmission among the plurality of service flows. To be specific, the association information is sent to the access network device by using the user plane.

With reference to the first aspect or any implementation of the first aspect, in some other implementations, the first PDU set carries the association information, the second PDU set does not carry the association information, and the association information includes an identifier of the second service flow and the offset value. Therefore, the access network device may find, based on the identifier of the second service flow and the offset value that are carried in the first PDU set, the second PDU set that is in the second service flow and that is associated with the PDU set. Alternatively, the first PDU set does not carry the association information, the second PDU set carries the association information, and the association information includes an identifier of the first service flow and the offset value. Therefore, the access network device may find, based on the identifier of the first service flow and the offset value that are carried in the second PDU set, the first PDU set that is in the first service flow and that is associated with the PDU set. Alternatively, that the first PDU set and/or the second PDU set carry/carries the association information includes: The first PDU set carries first association information, the second PDU set carries second association information, the first association information includes an identifier of a reference service flow and a first offset value, the first offset value is an offset value between identification information of associated PDU sets between the first service flow and the reference service flow, the second association information includes the identifier of the reference service flow and a second offset value, and the second offset value is an offset value between identification information of associated PDU sets between the second service flow and the reference service flow. Alternatively, that the first PDU set and/or the second PDU set carry/carries association information includes: The first PDU set carries first association information, the second PDU set carries second association information, the first association information includes an identifier of the second service flow and the offset value, and the second association information includes an identifier of the first service flow and the offset value. Alternatively, that the first PDU set and/or the second PDU set carry/carries the association information includes: The first PDU set carries first association information, the second PDU set carries second association information, the first association information includes first identifier information, and the second association information include the first identifier information, so that the access network device determines, based on the same first identifier information carried in the first service flow and the second service flow that are associated, that the first PDU set is associated with the second PDU set, and performs synchronous transmission on the first PDU set and the second PDU set that are associated.

With reference to the first aspect or any implementation of the first aspect, in some other implementations, the first identification information is a first PDU set sequence number (sequence number, SN), and the second identification information is a second PDU set SN; or the first identification information is a first timestamp, and the second identification information is a second timestamp; or the first identification information is a first PDU set synchronization sequence identifier, and the second identification information is a second PDU set synchronization sequence identifier. The first PDU set synchronization sequence identifier and the second PDU set synchronization sequence identifier are used to identify sequence information corresponding to the first PDU set and the second PDU set and are the same. For example, the first PDU set sequence identifier and the second PDU set sequence identifier may be the first PDU set sequence number and the second PDU set sequence number.

With reference to the first aspect or any implementation of the first aspect, in some other implementations, the method further includes: The access network device receives, from a user plane function network element or an application function network element, by using control plane signaling an offset value between association information of the associated PDU sets between the first service flow and the second service flow; and that the first PDU set and/or the second PDU set carry/carries the association information includes: the first PDU set carries first association information, and the second PDU set carries second association information; and that the access network device determines, based on the association information, that the first PDU set is associated with the second PDU set includes: when a difference between the first association information and the second association information is equal to the offset value, the access network device determines that the first PDU set is associated with the second PDU set.

Based on the foregoing implementation, the access network device can receive, by using a control plane, the offset value between the identification information of the associated PDU sets between the first service flow and the second service flow, which can reduce implementation complexity compared with obtaining the offset value by using a user plane. The first PDU set and the second PDU set that are associated are directly identified based on the preconfigured offset value.

With reference to the first aspect or any implementation of the first aspect, in some other implementations, the first association information is a first PDU set SN, and the second association information is a second PDU set SN; or the first association information is a first timestamp, and the second association information is a second timestamp.

With reference to the first aspect or any implementation of the first aspect, in some other implementations, the association information is included in a general packet radio service tunneling protocol-user plane (general packet radio service tunneling protocol-user plane, GTP-U) header of a PDU set.

For example, the association information is included in a GTP-U layer of a data packet corresponding to a PDU set.

With reference to the first aspect or any implementation of the first aspect, in some other implementations, the first indication information includes an identifier of the first service flow and an identifier of the second service flow; or the first indication information includes an identifier of the first service flow, an identifier of a first session to which the first service flow belongs, an identifier of a first terminal device to which the first session belongs, an identifier of the second service flow, an identifier of a second session to which the second service flow belongs, and/or an identifier of a second terminal device to which the second session belongs.

According to a second aspect, a communication method is provided. The method may be performed by a user plane function network element. Unless otherwise specified, the "user plane function network element" may be the user plane function network element itself, or may be an apparatus that can support the user plane function network element in implementing a function of the user plane function network element. For ease of description, the user plane function network element is uniformly used for description below.

The method includes: The user plane function network element obtains first indication information, where the first indication information indicates that a first service flow is associated with a second service flow; the user plane function network element receives a first PDU set of the first service flow and a second PDU set of the second service flow, where the first PDU set carries third association information, the second PDU set carries fourth association information, and the third association information and the fourth association information are used by the user plane function network element to determine that the first PDU set is associated with the second PDU set; the user plane function network element adds association information to the first PDU set and/or the second PDU set based on the first indication information, the third association information, and the fourth association information, where the association information is used by an access network device to determine that the first PDU set is associated with the second PDU set; and the user plane function network element sends the first PDU set and the second PDU set to the access network device.

Based on the foregoing method, the user plane function network element can determine, based on the first indication information, the third association information carried in the first PDU set, and the fourth association information carried in the second PDU set, that the first PDU set of the first service flow is associated with the second PDU set of the second service flow, and add, to the first PDU set and/or the second PDU set, the association information that can be obtained by the access network device, so that the access network device can determine, based on the association information carried in the first PDU set and/or the second PDU set, that the first PDU set of the first service flow is associated with the second PDU set of the second service flow, and perform synchronous transmission on the associated PDU sets. This ensures synchronous transmission on a plurality of service flows.

With reference to the second aspect, in some implementations, that the user plane function network element adds the association information to the first PDU set and/or the second PDU set based on the first indication information, the third association information, and the fourth association information includes: The user plane function network element determines, based on the first indication information, that the first service flow is associated with the second service flow; the user plane function network element determines, based on the third association information carried in the first PDU set and the fourth association information carried in the second PDU set, that the first PDU set is associated with the second PDU set; and the user plane function network element adds the association information to the first PDU set and/or the second PDU set.

With reference to the second aspect or any implementation of the second aspect, in some other implementations, that the user plane function network element determines, based on the third association information and the fourth association information, that the first PDU set is associated with the second PDU set includes: When the third association information is the same as the fourth association information, a difference between the third association information and the fourth association information is less than or equal to a threshold, a difference between the third association information and the fourth association information falls within a threshold range, or a difference between the third association information and the fourth association information is equal to an offset value, the user plane function network element determines that the first PDU set is associated with the second PDU set, where the offset value is an offset value between association information of associated PDU sets between the first service flow and the second service flow.

Based on the foregoing implementation, the user plane function network element can determine associated PDU sets among the plurality of service flows, and then add, to the associated PDU sets, association information that can be obtained by the access network device. This helps ensure synchronous transmission among the plurality of service flows.

With reference to the second aspect or any implementation of the second aspect, in some other implementations, the threshold and/or the offset value are/is from a session management function network element, a policy control function network element, or an application function network element.

With reference to the second aspect or any implementation of the second aspect, in some other implementations, that the user plane function network element adds the association information to the first PDU set and/or the second PDU set based on the first indication information, the third association information, and the fourth association information includes: The user plane function network element adds first association information to the first PDU set, and adds second association information to the second PDU set based on the first indication information, the third association information, and the fourth association information, where the first association information is the same as the second association information.

Based on the foregoing implementation, the user plane function network element can add the same association information to the associated PDU sets, so that the access network device can perform synchronous transmission on the PDU sets that carry the same association information in associated service flow.

With reference to the second aspect or any implementation of the second aspect, in some other implementations, the first association information is a first PDU set synchronization sequence identifier, and the second association information is a second PDU set synchronization sequence identifier. In other words, the user plane function network element adds a same PDU set sequence identifier to the associated PDU sets.

With reference to the second aspect or any implementation of the second aspect, in some other implementations, the first association information is a first PDU set SN, and the second association information is a second PDU set SN. In other words, the user plane function network element adds a same PDU set SN to the associated PDU sets.

With reference to the second aspect or any implementation of the second aspect, in some other implementations, the association information indicates an offset value between identification information of the associated PDU sets between the first service flow and the second service flow; and the method further includes: the user plane function network element adds first identification information to the first PDU set, and adds second identification information to the second PDU set, where the first identification information is the same as the third association information, and the second identification information is the same as the fourth association information.

Based on the foregoing implementation, the user plane function network element can provide, for the access network device by using a user plane, the offset value between the identification information of the associated PDU sets between the first service flow and the second service flow. Compared with the offset value preconfigured by using a control plane, the obtained offset value can better comply with the current service flows. This helps ensure synchronous transmission among the plurality of service flows.

With reference to the second aspect or any implementation of the second aspect, in some other implementations, adding the association information to the first PDU set and/or the second PDU set includes: adding the association information to the first PDU set, and skipping adding the association information to the second PDU set, where the association information includes an identifier of the second service flow and the offset value; or skipping adding the association information to the first PDU set, and adding the association information to the second PDU set, where the association information includes an identifier of the first service flow and the offset value; or adding first association information to the first PDU set, and adding second association information to the second PDU set, where the first association information includes an identifier of a reference service flow and a first offset value, the first offset value is an offset value between identification information of associated PDU sets between the first service flow and the reference service flow, the second association information includes the identifier of the reference service flow and a second offset value, and the second offset value is an offset value between identification information of associated PDU sets between the second service flow and the reference service flow; or adding first association information to the first PDU set, and adding second association information to the second PDU set, where the first association information includes an identifier of the second service flow and the offset value, and the second association information includes an identifier of the first service flow and the offset value; or adding first association information to the first PDU set, and adding second association information to the second PDU set, where the first association information includes first identifier information, and the second association information includes the first identifier information, so that the access network device determines, based on the same first identifier information carried in the first service flow and the second service flow that are associated, that the first PDU set is associated with the second PDU set, and perform synchronous transmission on the first PDU set and the second PDU set that are associated.

With reference to the second aspect or any implementation of the second aspect, in some other implementations, the third association information and the first identification information are a first PDU set synchronization sequence identifier, for example, a PDU set SN, and the fourth association information and the second identification information are a second PDU set synchronization sequence identifier, for example, a PDU set SN; or the third association information and the first identification information are a first timestamp, and the fourth association information and the second identification information are a second timestamp.

With reference to the second aspect or any implementation of the second aspect, in some other implementations, the method further includes: The user plane function network element determines the offset value based on the third association information and the fourth association information.

Based on the foregoing implementation, the user plane function network element can determine the offset value between the identification information of the associated PDU sets between the first service flow and the second service flow. Compared with the offset value preconfigured by the control plane, the offset value obtained in this manner can be more accurate in real time and better comply with the current service flows. This helps ensure synchronous transmission among the plurality of service flows.

With reference to the second aspect or any implementation of the second aspect, in some other implementations, the method further includes: The user plane function network element obtains third indication information, where the third indication information indicates the user plane function network element to identify the associated PDU sets.

With reference to the second aspect or any implementation of the second aspect, in some other implementations, the third indication information further indicates a manner for the user plane function network element to identify the associated PDU sets, and the manner is any one of the following manners: an identification manner based on a timestamp or an identification manner based on a PDU set SN.

With reference to the second aspect or any implementation of the second aspect, in some other implementations, the identification manner based on the timestamp includes at least one of the following manners: PDU sets with a same timestamp are associated, PDU sets with timestamps whose difference is less than or equal to a threshold are associated, PDU sets with timestamps whose difference is equal to an offset value are associated, and PDU sets with timestamps whose difference falls within a threshold range are associated; and/or the identification manner based on the PDU set SN includes at least one of the following manners: PDU sets with a same PDU set SN are associated, PDU sets with PDU set SNs whose difference is less than or equal to a threshold are associated, PDU sets with PDU set SNs whose difference is equal to an offset value are associated, and PDU sets with PDU set SNs whose difference falls within a threshold range are associated.

With reference to the second aspect or any implementation of the second aspect, in some other implementations, the method further includes: The user plane function network element obtains fourth indication information, where the fourth indication information indicates the user plane function network element to mark the associated PDU sets.

With reference to the second aspect or any implementation of the second aspect, in some other implementations, the first indication information includes an identifier of the first service flow and an identifier of the second service flow; or the first indication information includes an identifier of the first service flow, an identifier of a first session to which the first service flow belongs, an identifier of a first terminal device to which the first session belongs, an identifier of the second service flow, an identifier of a second session to which the second service flow belongs, and/or an identifier of a second terminal device to which the second session belongs.

According to a third aspect, a communication method is provided. The method may be performed by a user plane function network element. Unless otherwise specified, the "user plane function network element" may be the user plane function network element itself, or may be an apparatus that can support the user plane function network element in implementing a function of the user plane function network element. For ease of description, the user plane function network element is uniformly used for description below.

The method includes: The user plane function network element obtains fifth indication information, where the fifth indication information indicates association information to be added by the user plane function network element to a first service flow, and the association information is used by an access network device to determine associated PDU sets between the first service flow and a second service flow; the user plane function network element receives a first PDU set of the first service flow; the user plane function network element adds the association information to the first PDU set based on the fifth indication information; and the user plane function network element sends the first PDU set to the access network device.

Based on the foregoing method, the user plane function network element can obtain the information indicating the association information to be added to the first service flow, and then add the specific association information to the PDU set in the first service flow based on the obtained information. Based on this, in a scenario in which a plurality of service flows on which synchronous transmission needs to be performed correspond to a plurality of user plane function network elements, the plurality of user plane function network elements can add specific association information to the service flows, to ensure that the associated PDU sets among the plurality of service flows carry the same association information, so that the access network device can perform synchronous transmission on the PDU sets that carry the same association information. This ensures synchronous transmission on the plurality of service flows.

With reference to the third aspect, in some implementations, the fifth indication information includes a third timestamp corresponding to the first service flow and a third PDU set SN corresponding to the third timestamp, and the association information to be added the user plane function network element to the first PDU set is a first PDU set SN; and adding the association information to the first PDU set based on the fifth indication information includes: adding the first PDU set SN to the first PDU set based on the third timestamp, the third PDU set SN, and a first timestamp carried in the first PDU set.

Based on the foregoing implementation, the user plane function network element can add a PDU set SN to the current PUD set based on a timestamp obtained in advance, a PDU set SN corresponding to the timestamp, and a timestamp carried in the current PDU set. In this way, in the scenario in which the plurality of service flows on which synchronous transmission needs to be performed correspond to the plurality of user plane function network elements, as long as a timestamp corresponding to each service flow and a PDU set SN corresponding to the timestamp are designed, it can be ensured that the associated PDU sets among the plurality of service flows carry a same PDU set SN, so that the access network device determines the associated PDU sets among the plurality of service flows, and the access network device can perform synchronous transmission on the PDU sets that carry the same PDU set SN. This ensures synchronous transmission on the plurality of service flows.

With reference to the third aspect or any implementation of the third aspect, in some other implementations, the method further includes: obtaining period information, where the period information indicates a time interval between two adjacent PDU sets of the first service flow; and adding the second PDU set SN to the first PDU set based on the third timestamp, the third PDU set SN, and the first timestamp carried in the first PDU set includes: adding the first PDU set SN to the first PDU set based on the third timestamp, the third PDU set SN, the first timestamp, and the period information.

With reference to the third aspect or any implementation of the third aspect, in some other implementations, the fifth indication information includes a PDU set SN offset value corresponding to the first service flow, and the association information to be added the user plane function network element to the first PDU set is a first PDU set SN; and adding the association information to the first PDU set based on the fifth indication information includes: adding the first PDU set SN to the PDU set based on the offset value and a fourth PDU set SN carried in the first PDU set, where the first PDU set SN is offset by the offset value relative to the fourth PDU set SN.

Based on the foregoing implementation, the user plane function network element can adjust, based on a PDU set SN offset value obtained in advance, a PDU set SN carried in the current PUD set, and add an adjusted PDU set SN to the current PDU set. In this way, in the scenario in which the plurality of service flows on which synchronous transmission needs to be performed correspond to the plurality of user plane function network elements, as long as an offset value, of each service flow, that needs to be adjusted, is designed, it can be ensured that the associated PDU sets among the plurality of service flows carry the same PDU set SN, so that the access network device determines the associated PDU sets among the plurality of service flows, and the access network device can perform synchronous transmission on the PDU sets that carry the same PDU set SN. This ensures synchronous transmission on the plurality of service flows.

According to a fourth aspect, a communication method is provided. The method may be performed by an application function network element. Unless otherwise specified, the "user plane function network element" may be the application function network element itself, or may be an apparatus that can support the application function network element in implementing a function of the application function network element. For ease of description, the application function network element is uniformly used for description below.

The method includes: The application function network element determines synchronization assistance information, where the synchronization assistance information includes first indication information, and the first indication information indicates that a first service flow is associated with a second service flow; and the application function network element sends the synchronization assistance information to a policy control function network element.

Based on the foregoing method, the application function network element can provide synchronization assistance information for synchronous transmission on associated PDU sets among a plurality of service flows. This helps ensure synchronous transmission among the plurality of service flows.

With reference to the fourth aspect, in some implementations, the synchronization assistance information includes second indication information, and the second indication information indicates a requirement for synchronization between the first service flow and the second service flow.

Based on the foregoing implementation, the application function network element can provide a requirement for synchronization for transmission on the associated PDU sets among the plurality of service flows. The requirement for synchronization better complies with an actual requirement of the plurality of service flows. This helps ensure synchronous transmission among the plurality of service flows.

With reference to the fourth aspect or any implementation of the fourth aspect, in some other implementations, the requirement for synchronization includes a maximum value of a difference between transmission delays of associated PDU sets between the first service flow and the second service flow.

With reference to the fourth aspect or any implementation of the fourth aspect, in some other implementations, the synchronization assistance information further includes at least one of the following information: an offset value, third indication information, fourth indication information, fifth indication information, or sixth indication information, where the offset value is an offset value between association information of associated PDU sets between the first service flow and the second service flow, the third indication information indicates a user plane function network element to identify the associated PDU sets, the fourth indication information indicates the user plane function network element to mark the associated PDU sets, the fifth indication information indicates association information to be added the user plane function network element to the first service flow and/or association information to be added the user plane function network element to the second service flow, the association information is used to determine the associated PDU sets between the first service flow and the second service flow, and the sixth indication information indicates the user plane function network element to add the association information carried in the PDU set to a GTP-U header.

Based on the foregoing implementation, the application function network element can provide more information for synchronous transmission on the associated PDU sets among the plurality of service flows. This helps ensure synchronous transmission among the plurality of service flows.

With reference to the fourth aspect or any implementation of the fourth aspect, in some other implementations, the third indication information further indicates a manner for the user plane function network element to identify the associated PDU sets, and the manner is any one of the following manners: an identification manner based on a timestamp or an identification manner based on a PDU set SN.

With reference to the fourth aspect or any implementation of the fourth aspect, in some other implementations, the fifth indication information includes a PDU set SN offset value corresponding to the first service flow and/or a PDU set SN offset value corresponding to the second service flow, the PDU set SN offset value corresponding to the first service flow is an offset value of a PDU set SN added by the user plane function network element to a PDU set of the first service flow relative to a PDU set SN added by an application server to the PDU set of the first service flow, and the PDU set SN offset value corresponding to the second service flow is an offset value of a PDU set SN added by the user plane function network element to a PDU set of the second service flow relative to a PDU set SN added by the application server to the PDU set of the second service flow.

Based on the foregoing implementation, the application function network element can provide a timestamp and a PDU set SN corresponding to the timestamp, so that the user plane function network element can add a PDU set SN to the current PDU set based on the timestamp obtained in advance, the PDU set SN corresponding to the timestamp, and a timestamp carried in the current PUD set. In this way, in the scenario in which the plurality of service flows on which synchronous transmission needs to be performed correspond to the plurality of user plane function network elements, as long as a timestamp corresponding to each service flow and a PDU set SN corresponding to the timestamp are designed, it can be ensured that the associated PDU sets among the plurality of service flows carry a same PDU set SN, so that the access network device determines the associated PDU sets among the plurality of service flows, and the access network device can perform synchronous transmission on the PDU sets that carry the same PDU set SN. This ensures synchronous transmission on the plurality of service flows.

With reference to the fourth aspect or any implementation of the fourth aspect, in some other implementations, the fifth indication information includes: a third timestamp corresponding to the first service flow and a first PDU set SN corresponding to the third timestamp, and/or a fourth timestamp corresponding to the second service flow and a third PDU set SN corresponding to the fourth timestamp.

Based on the foregoing implementation, the application function network element can provide a PDU set SN offset value, so that the user plane function network element can adjust, based on the PDU set SN offset value obtained in advance, a PDU set SN carried in the current PUD set, and add an adjusted PDU set SN to the current PDU set. In this way, in the scenario in which the plurality of service flows on which synchronous transmission needs to be performed correspond to the plurality of user plane function network elements, as long as an offset value, of each service flow, that needs to be adjusted, is designed, it can be ensured that the associated PDU sets among the plurality of service flows carry the same PDU set SN, so that the access network device determines the associated PDU sets among the plurality of service flows, and the access network device can perform synchronous transmission on the PDU sets that carry the same PDU set SN. This ensures synchronous transmission on the plurality of service flows.

With reference to the fourth aspect or any implementation of the fourth aspect, in some other implementations, the synchronization assistance information includes the sixth indication information, and the method further includes: The application function network element receives first configuration information from an application service provider, where the first configuration information indicates to perform synchronous transmission on the first service flow and the second service flow that are of a service; and the application function network element sends second configuration information to the application server based on the first configuration information, where the second configuration information indicates to add the same association information to the associated PDU sets between the first service flow and the second service flow.

Based on the foregoing implementation, a solution in which an application layer ensures synchronous transmission on the plurality of service flows can be provided.

With reference to the fourth aspect or any implementation of the fourth aspect, in some other implementations, the second configuration information further indicates a synchronization type, the synchronization type is single-user synchronization or multi-user synchronization, the single-user synchronization indicates that the first service flow and the second service flow are service flows of a same user, and the multi-user synchronization indicates that the first service flow and the second service flow are service flows of different users.

According to a fifth aspect, a communication method is provided. The method may be performed by an application service provider. Unless otherwise specified, the "application service provider" may be the application service provider itself, or may be an apparatus that can support the application service provider in implementing a function of the application service provider. For ease of description, the application service provider is uniformly used for description below.

The method includes: The application service provider determines first configuration information, where the first configuration information indicates to perform synchronous transmission on a first service flow and a second service flow of a service; and the application service provider sends the first configuration information to an application function.

Based on the foregoing implementation, a solution in which an application layer ensures synchronous transmission on a plurality of service flows can be provided.

According to a sixth aspect, a communication method is provided. The method may be performed by an application server. Unless otherwise specified, the "application server" may be the application server itself, or may be an apparatus that can support the application server in implementing a function of the application server. For ease of description, the application server is uniformly used for description below.

The method includes: The application server receives second configuration information from an application function, where the second configuration information indicates to add same association information to associated PDU sets between a first service flow and a second service flow of a service; and the application server adds the same association information to a first PDU set of the first service flow and a second PDU set of the second service flow based on the second configuration information.

Based on the foregoing implementation, a solution in which an application layer ensures synchronous transmission on a plurality of service flows can be provided.

With reference to the sixth aspect, in some implementations, the association information is a PDU set SN.

With reference to the sixth aspect or any implementation of the sixth aspect, in some other implementations, the second configuration information further indicates a synchronization type, the synchronization type is single-user synchronization or multi-user synchronization, the single-user synchronization indicates that the first service flow and the second service flow are service flows of a same user, and the multi-user synchronization indicates that the first service flow and the second service flow are service flows of different users.

According to a seventh aspect, a communication method is provided. The method may be performed by a user plane function network element. Unless otherwise specified, the "user plane function network element" may be the user plane function network element itself, or may be an apparatus that can support the user plane function network element in implementing a function of the user plane function network element. For ease of description, the user plane function network element is uniformly used for description below.

The method includes: The user plane function network element receives a first PDU set of a first service flow and a second PDU set of a second service flow, where the first PDU set carries first association information, the second PDU set carries second association information, and the first association information and the second association information are used to determine that the first PDU set is associated with the second PDU set; the user plane function network element adds the first association information to a GTP-U header of the first PDU set, and adds second association information to a GTP-U header of the second PDU set; and the user plane function network element sends the first PDU set and the second PDU set to an access network device.

Based on the foregoing method, the user plane function network element can add, to a GTP-U layer, association information carried in a PDU set, so that the access network device can obtain the association information, identify, based on the association information, associated PDU sets among a plurality of service flows, and perform synchronous transmission on the associated PDU sets. This ensure synchronous transmission among the plurality of service flows.

With reference to the seventh aspect, in some implementations, the method further includes: The user plane function network element receives sixth indication information, where the sixth indication information is used by the user plane function network element to add, to a GTP-U header, the association information carried in a PDU set.

With reference to the seventh aspect or any implementation of the seventh aspect, in some other implementations, the first association information and the second association information are a PDU set SN or a timestamp.

According to an eighth aspect, a communication method is provided. The method includes the method steps performed by the access network device in the first aspect or the implementations of the first aspect, the method steps performed by the user plane function network element in the second aspect or the implementations of the second aspect, and the method steps performed by the application function network element in the fourth aspect or the implementations of the fourth aspect; or the method includes the method steps performed by the access network device in the first aspect or the implementations of the first aspect, the method steps performed by the user plane function network element in the third aspect or the implementations of the third aspect, and the method steps performed by the application function network element in the fourth aspect or the implementations of the fourth aspect; or the method includes the method steps performed by the access network device in the first aspect or the implementations of the first aspect, the method steps performed by the user plane function network element in the seventh aspect or the implementations of the seventh aspect, and the method steps performed by the application function network element in the fourth aspect or the implementations of the fourth aspect; or the method includes the method steps performed by the access network device in the first aspect or the implementations of the first aspect, the method steps performed by the user plane function network element in the seventh aspect or the implementations of the seventh aspect, the method steps performed by the application function network element in the fourth aspect or the implementations of the fourth aspect, the method steps performed by the application service provider in the fifth aspect or the implementations of the fifth aspect, the method steps performed by the application server in the sixth aspect or the implementations of the sixth aspect, and the method steps performed by the application function network element in the fourth aspect or the implementations of the fourth aspect.

According to a ninth aspect, a communication apparatus is provided. The communication apparatus may be an access network device, a user plane function network element, an application function network element, an application service provider, or an application server, or may be an apparatus, a module, a circuit, a chip, or the like that is configured and disposed in an access network device, a user plane function network element, an application function network element, an application service provider, or an application server, or may be an apparatus that can be used in a matching manner with an access network device, a user plane function network element, an application function network element, an application service provider, or an application server. In a design, the communication apparatus may include modules that are in one-to-one correspondence with the methods/operations/steps/actions described in the corresponding aspect or the implementations of the corresponding aspect. The module may be implemented by a hardware circuit, software, or a combination of a hardware circuit and software. In a design, the communication apparatus may include a processing module and a communication module.

The sending module is configured to perform a sending action in the foregoing described method, and the processing module is configured to perform a processing-related action in the foregoing described method.

According to a tenth aspect, a communication apparatus is provided, and includes a processing circuit and a storage medium. The storage medium stores instructions, and when the instructions are run by the processing circuit, the method in any one of the foregoing aspects or any possible implementation of the foregoing aspect is implemented.

Optionally, the communication apparatus may be an access network device, a user plane function network element, an application function network element, an application service provider, or an application server.

Optionally, the communication apparatus may be a chip used in an access network device, a user plane function network element, an application function network element, an application service provider, or an application server.

According to an eleventh aspect, a communication apparatus is provided, and includes a processing circuit. The processing circuit is configured to process data and/or information, so that the method in any one of the foregoing aspects or the implementations of the foregoing aspect is implemented. Optionally, the apparatus may further include a memory, where the memory is configured to store a program or instructions. Optionally, the communication apparatus may further include a communication interface, where the communication interface is configured to: receive the data and/or information, and transmit the received data and/or information to the processing circuit. Optionally, the communication interface is further configured to output data and/or information processed by the processing circuit. The communication interface may also be referred to as an interface circuit or a transceiver circuit.

Optionally, the communication apparatus may be an access network device, a user plane function network element, an application function network element, an application service provider, or an application server.

Optionally, the communication apparatus may be a chip used in an access network device, a user plane function network element, an application function network element, an application service provider, or an application server.

According to a twelfth aspect, a chip system is provided, and includes a processing circuit. The processing circuit is configured to run a program or instructions, so that the method in any one of the foregoing aspects or the implementations of the foregoing aspect is implemented. Optionally, the chip system may further include an input/output interface. Optionally, the chip system may further include a memory, where the memory is configured to store the program or the instructions. The processing circuit may also be referred to as a logic circuit.

According to a thirteenth aspect, a computer-readable storage medium is provided. The computer-readable storage medium includes instructions, and when the instructions are run by a processing circuit, the method in any one of the foregoing aspects or the implementations of the foregoing aspect is implemented.

According to a fourteenth aspect, a computer program product is provided. The computer program product includes computer program code or instructions, and when the computer program code or the instructions are run, the method in any one of the foregoing aspects or the implementations of the foregoing aspects is implemented.

According to a fifteenth aspect, a communication system is provided. The communication system includes one or a combination of the following apparatuses: the communication apparatus in any one of the first aspect or the possible implementations of the first aspect, the communication apparatus in any one of the second aspect or the possible implementations of the second aspect, the communication apparatus in any one of the third aspect or the possible implementations of the third aspect, the communication apparatus in any one of the fourth aspect or the possible implementations of the fourth aspect, the communication apparatus in any one of the fifth aspect or the possible implementations of the fifth aspect, the communication apparatus in any one of the sixth aspect or the possible implementations of the sixth aspect, or the communication apparatus in any one of the seventh aspect or the possible implementations of the seventh aspect.

### BRIEF DESCRIPTION OF DRAWINGS

FIG. 1 is a diagram of a communication system applicable to an embodiment of this application;
FIG. 2 is a schematic flowchart of a communication method 200 according to an embodiment of this application;
FIG. 3a and FIG. 3b are a schematic flowchart of a communication method 300 according to an embodiment of this application;
FIG. 4a and FIG. 4b are a schematic flowchart of a communication method 400 according to an embodiment of this application;
FIG. 5 is a schematic flowchart of a communication method 500 according to an embodiment of this application;
FIG. 6a and FIG. 6b are a schematic flowchart of a communication method 600 according to an embodiment of this application;
FIG. 7 is a schematic flowchart of a communication method 700 according to an embodiment of this application;
FIG. 8a and FIG. 8b are a schematic flowchart of a communication method 800 according to an embodiment of this application;
FIG. 9 is a schematic flowchart of a communication method 900 according to an embodiment of this application;
FIG. 10a and FIG. 10b are a schematic flowchart of a communication method 1000 according to an embodiment of this application;
FIG. 11 is a diagram of a structure of an apparatus according to an embodiment of this application;
FIG. 12 is a diagram of another structure of an apparatus according to an embodiment of this application; and
FIG. 13 is a diagram of a chip system according to an embodiment of this application.

### DESCRIPTION OF EMBODIMENTS

For ease of understanding embodiments of this application, before embodiments of this application are described, the following descriptions are first provided.

An "indication" includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured. That information C is used to determine information D includes that the information D is determined only based on the information C, and also includes that the information D is determined based on the information C and other information. In addition, that information C is used to determine information D may further include an indirect determining case. For example, the information D is determined based on information E, and the information E is determined based on the information C. That "a network element A sends information A to a network element B" may be understood as that a destination end of the information A or an intermediate network element in a transmission path between the network element A and the destination end is the network element B, and may include directly or indirectly sending information to the network element B. That "a network element B receives information A from a network element A" may be understood as that a source end of the information A or an intermediate network element in a transmission path between the network element B and the source end is the network element A, and may include directly or indirectly receiving information from the network element A. Necessary processing, for example, a format change, may be performed on the information between the source end and the destination end to which the information is sent, but the destination end can understand valid information from the source end. Various numbers such as first and second are merely used for differentiation for ease of description, and are not used to limit the scope of embodiments of this application, for example, to distinguish between different messages and different information. "Predefinition" may be implemented by pre-storing corresponding code or a corresponding table in a device, or may be implemented in another manner that may indicate related information. A specific implementation of the predefinition is not limited in this application. A related "protocol" may be a standard protocol in the communication field, for example, may include a long term evolution (long term evolution, LTE) protocol, a new radio (new radio, NR) protocol, and a related protocol applied to a future communication system. This is not limited in this application. Words such as "for example", "example", and "in an (another) example" represent giving an example, an illustration, or a description. Any embodiment or design scheme described as an "example" in this application should not be explained as being more preferred or having more advantages than another embodiment or design scheme. The terms "include", "have", and their variants all mean "include but are not limited to", unless otherwise specifically emphasized in another manner. ''A plurality of'' refers to two or more than two. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form. Descriptions such as "when...", "in a case of...", "in response to", and "if" all mean that a device performs corresponding processing in a specific objective situation, where time is not limited, the device is not necessarily required to perform a determining action during implementation, and there are no other limitations.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes communication systems to which embodiments of this application may be applied.

Embodiments of this application may be applied to various communication systems, for example, an LTE system, a frequency division duplex (frequency division duplex, FDD) system, a time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or an NR system, a 6th generation (6th generation, 6G) system, or a future communication system. The 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a device-to-device (device-to-device, D2D) communication system, a machine-to-machine (machine-to-machine, M2M) communication system, an internet of things (internet of Things, IoT) communication system, a vehicle-to-everything (vehicle-to-everything, V2X) communication system, an uncrewed aerial vehicle (uncrewed aerial vehicle, UAV) communication system, or another communication system.

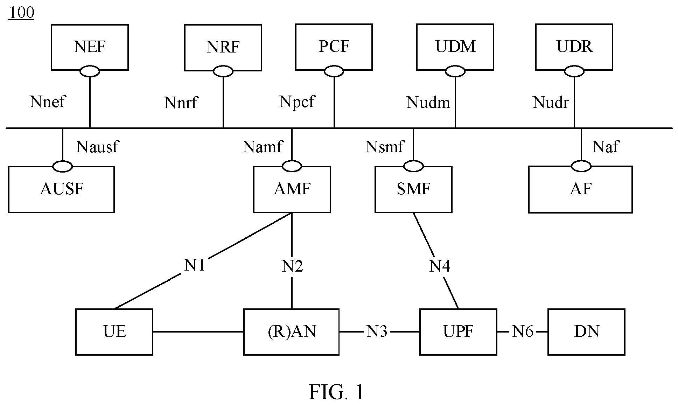

For example, FIG. 1 is a diagram of a network architecture applicable to an embodiment of this application. As shown in FIG. 1, the network architecture may specifically include three parts: a terminal device part, a data network (data network, DN), and an operator network part. The following briefly describes functions of network elements of each part.

The terminal device part may include a terminal device, and the terminal device may also be referred to as user equipment (user equipment, UE). The terminal device in this application is a device having a wireless transceiver function, and may communicate with one or more core network (core network, CN) devices via an access network device (which may also be referred to as an access device) in a radio access network (radio access network, RAN). The terminal device may also be referred to as an access terminal, a terminal, a subscriber unit, a subscriber station, a mobile station, a remote station, a remote terminal, a mobile device, a user terminal, a user agent, a user apparatus, or the like. The terminal device may be deployed on land, and includes an indoor device, an outdoor device, a handheld device, or a vehicle-mounted device; may be deployed on water (for example, on a ship); or may be deployed in the air (for example, on an aircraft, a balloon, and a satellite). The terminal device may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the terminal device may be a handheld device having a wireless communication function, a compute device, another device connected to a wireless modem, a vehicle-mounted device, a wearable device, an uncrewed aerial vehicle device, a terminal in an internet of things or an internet of vehicles, a terminal in any form in the 5G network or a future network, relay user equipment, a terminal in a future evolved 6G network, or the like. The relay user equipment may be, for example, a 5G residential gateway (residential gateway, RG). For example, the terminal device may be a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal device herein is a 3GPP terminal. A specific technology and a specific device form that are used by the terminal device are not limited in embodiments of this application.

The data network, which may also be referred to as a packet data network (packet data network, PDN), is usually a network located outside an operator network, for example, a third-party network. Certainly, in some implementations, the DN may alternatively be deployed by an operator, that is, the DN is a part of a PLMN. The operator network may access a plurality of data networks DNs, and a plurality of services may be deployed on the data network DN, to provide data and/or voice services for the terminal device. The terminal device may further access the data network DN over the operator network, to use an operator service deployed on the data network DN and/or a service provided by a third party.

The operator network part may include but is not limited to a (radio) access network ((radio) access network, (R)AN) part and a core network (core network, CN) part.

An (R)AN, which may be considered as a sub-network in the operator network, is an implementation system between a service node in the operator network and the terminal device. To access the operator network, the terminal device first passes through the (R)AN, and then may be connected to the service node in the operator network over the (R)AN. An access network device (RAN device) in embodiments of this application is a device that provides a wireless communication function for the terminal device, and may also be referred to as a network device. The RAN device includes but is not limited to a next generation node base station (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmitting and receiving point (transmitting and receiving point, TRP), a transmitting point (transmitting point, TP), a small cell device (pico), a mobile switching center, a network device in a future network, or the like. In systems using different radio access technologies, devices with functions of the access network device may have different names. A specific technology and a specific device form that are used by the access network device are not limited in embodiments of this application.

The CN part includes but is not limited to the following network functions (Network Functions, NFs): a user plane function (user plane function, UPF), a network exposure function (network exposure function, NEF), a network function repository function (network function repository function, NRF), a policy control function (policy control function, PCF), UDM, UDR, a network data analytics function (network data analytics function, NWDAF), an authentication server function (Authentication Server Function, AUSF), an access and mobility management function (access and mobility management function, AMF), a session management function (session management function, SMF), and an application function (application function, AF).

The following further briefly describes functions of the NFs included in the CN.
1. The UPF, which is a gateway for communication between the operator network and the data network DN, mainly provides user plane functionalities such as user packet forwarding and processing, connecting to the DN, session anchoring, and quality of service (quality of service, QoS) policy enforcement.
2. The NEF, which is a control plane function, is mainly use to securely expose, to outside (for example, the AF), services and capabilities provided by 3GPP network functions. The NEF also allows authenticated and authorized application functions to securely provide information in a 3GPP network.
3. The NRF, which is a control plane function, may be used to maintain real-time information about network functions and services in the network.
4. The PCF, which is a control plane function, supports a unified policy framework to govern network behaviors, and provides policy rules, subscription information related to policy decisions, and the like for another control function.
5. The UDM, which is a control plane function, is mainly responsible for storing subscription data of subscribers in the operator network.
6. The UDR, which is a control plane function, is mainly responsible for data storage and retrieval, for example, providing functionalities such as storage and retrieval of subscription data by the UDM, storage and retrieval of policy data by the PCF, and storage and retrieval of NF group ID (group ID) information of users.
7. The AUSF, which is a control plane function, is usually used for primary authentication, that is, authentication between the terminal device (a subscriber) and the operator network.
8. The AMF, which is a control plane function, is mainly responsible for access control and mobility management for accessing the operator network by the terminal device, for example, including functionalities such as mobility status management, allocation of a temporary user identity, and user authentication and authorization.
9. The SMF, which is a control plane function, is mainly responsible for session-related functionalities such as session management (for example, session establishment, modify, and release), UPF network function selection and control, service and session continuity (service and session continuity, SSC) mode selection, and roaming.
10. The AF, which is a control plane function, is used to provide application layer information. AFs are mainly classified into two types. A first type is an AF that is considered to be trusted by an operator based on operator deployment, and the AF of this type may directly interact with another network function in the network. A second type is an AF that is not allowed by the operator to directly access a network function, for example, a third-party AF, and the AF of this type may interact with another network function over an NEF network.

Nnef, Nnrf, Npcf, Nudm, Nudr, Nausf, Namf, Nsmf, N1, N2, N3, N4, N6, and N9 in FIG. 1 are interface sequence numbers. For example, for meanings of the interface serial numbers, refer to meanings defined in the 3GPP standard protocol. The meanings of the interface serial numbers are not limited in this application. It should be noted that the names of the interfaces between the network functions in FIG. 1 are merely examples. In a specific implementation, the interfaces in the system architecture may alternatively have other names. This is not limited in this application. In addition, names of messages (or signaling) transmitted between the foregoing network elements are merely examples, and do not constitute any limitation on functions of the messages. In the network architecture shown in FIG. 1, the network elements may communicate with each other through interfaces. The interfaces between the network elements may be point-to-point interfaces, or may be service-based interfaces. This is not limited in this application.

It should be understood that the network architecture shown above is merely an example for description, and the network architecture applicable to embodiments of this application is not limited thereto. Any network architecture that can implement functions of the network elements is applicable to embodiments of this application.

It should be further understood that functions or the network elements such as the AMF, the SMF, the UPF, the PCF, the UDM, the AUSF, the UDR, the NEF, the NRF, and the AF shown in FIG. 1 may be understood as network elements configured to implement different functions, for example, may be combined into a network slice as needed. These network elements may be independent devices, may be integrated into a same device to implement different functions, may be network elements in a hardware device, may be software functions running on dedicated hardware, or may be virtualized functions instantiated on a platform (for example, a cloud platform). Specific forms of the foregoing network elements are not limited in this application.

It should be further understood that the foregoing names are defined merely for distinguishing between different functions, and should not constitute any limitation on this application. This application does not exclude a possibility of using other names in a 6G network and another future network. For example, in the 6G network, a part or all of the foregoing network elements may still use terms in 5G, or may use other names.

For ease of understanding embodiments of this application, several concepts or terms in embodiments of this application are briefly described.

The concepts or the terms described below are described based on concepts or terms specified in a protocol. However, this does not mean that embodiments of this application can be applied only to a current existing system, and the concepts or the terms in embodiments of this application can be applied to a future system. In addition, specific names of the concepts or the terms (for example, concepts or terms related to functional descriptions) may be adjusted with development of the future system.

### 1. QoS flow (QoS flow)

When there is a service communication requirement, a terminal device establishes a data connection session (for example, a protocol data unit (protocol data unit, PDU), and the PDU session is used as an example for description subsequently). The PDU session may have one or more QoS flows, and a service data flow or a service flow is carried in the QoS flow. Specifically, the terminal device obtains an internet protocol (Internet Protocol, IP) address by a PDU session establishment process, to interact with a service server, to implement service communication. A 5GS maps services to different QoS flows based on service flow description information, and performs corresponding QoS handling on service flows.

### 2. QoS flow identifier (QoS flow identifier, QFI)

QFIs are unique identifiers of different QoS flows in a PDU session.

### 3. QoS rule (QoS rule)

A QoS rule is a QoS configuration sent to a terminal device side. The QoS rule may include at least one of the following information: a QFI, a data packet filter (such as an IP quintuple), a QoS rule identifier, or the like.

### 4. QoS profile (QoS profile)

A QoS profile is a QoS configuration sent to a RAN side, and may specifically include at least one of the following information: a 5G QoS identifier (5G QoS Identifier, 5QI), an allocation and retention priority (allocation and retention priority, ARP), a guaranteed flow bit rate (guaranteed flow bit rate, GFBR)/maximum flow bit rate (maximum flow bit rate, MFBR), a QFI, or the like.

### 5. N4 rule (N4 rule)

An N4 rule is a service flow identification and processing rule sent to a UPF side, and may include at least one of the following information: a data packet detection rule, a usage reporting rule, a QoS execution rule, or the like. The QoS execution rule may include at least one of the following information: a maximum bit rate, a guaranteed bit rate, an average window, or the like.

### 6. Protocol data unit set

In a QoS mechanism, service assurance is performed at a granularity of a data packet. For example, service assurance is performed by using a data packet error rate (packet error rate, PER) and a data packet delay budget (packet delay budget, PDB) in QoS parameters. Data packets of a specific service are mapped to a same QoS flow, and policy processing and transmission are performed on the data packets one by one by using same QoS parameters. In other words, same and undifferentiated processing is performed on all data packets in one QoS flow in a transmission process.

In research of extended reality and media service (extended reality and media service, XRM), a real-time media service, for example, a currently emerging service like a virtual reality (virtual reality, VR) service, an augmented reality (augmented reality, AR) service, a mixed reality (mixed reality, MR) service, or a cloud game service, has an extremely strict requirement on an end-to-end delay, and data processing on the services in an encoding, rendering, and decoding process is no longer performed at a granularity of a data packet. For example, when service data is encoded at an upper-layer service layer (for example, a media layer) at a transmit end, encoding is usually performed at a granularity like a media frame or fragment, that is, encoding may be independently performed on the media frame or fragment; and the received service data is decoded and displayed at the same granularity like the media frame or fragment at a receive end of a service. A data unit like a media frame or fragment usually includes a plurality of data packets. If a data packet in the data unit like the media frame or fragment is lost or damaged, the entire data unit may be difficult to decode and display correctly.

Therefore, a QoS mechanism of a PDU set granularity is introduced in the standard, that is, a loss rate, a delay requirement, or the like of the PDU set granularity is provided. A communication system identifies a relationship among different data packets and PDU sets, determines data packets included in one PDU set, and schedules, processes, and transmits all the data packets in the PDU set as a whole based on QoS parameters of the PDU set granularity, to ensure user service experience.

### 7. Multi-modal service

A multi-modal service is usually a service including a plurality of modal service flows. For example, a multi-modal service flow may be a service flow of different modes such as an audio stream, a video stream, a tactile stream, a temperature stream, and/or a luminance stream. For example, a common multimedia service may include an audio stream, a video stream, control data, and/or the like.

To provide high-quality and consistent service experience, synchronous transmission needs to be ensured among the plurality of service flows of the multi-modal service.

Table 1 shows an example of a requirement for synchronization between a plurality of service flows of a multi-modal service.

**Table 1**

| Media components (media components) | Synchronization threshold (synchronization threshold) | |
|---|---|---|
| Audio-tactile (audio-tactile) | Audio delay (audio delay): 50 ms | Tactile delay (tactile delay): 25 ms |
| Visual-tactile (visual-tactile) | Visual delay (visual delay): 15 ms | Tactile delay (tactile delay): 50 ms |

As shown in Table 1, there is a specific delay requirement for synchronization between the audio-tactile media components or the visual-tactile media components of the multi-modal service. It should be noted that for each media component, "delay" is a latency of the media component compared with another media component. For example, for the audio-tactile media components, an audio delay of 50 milliseconds (ms) is relative to the tactile media component.

Currently, in the discussion of the 3rd generation partnership project (the 3rd generation partnership project, 3GPP) standard, support for the multi-modal service is preliminarily determined, but how to ensure synchronous transmission among the plurality of service flows of the multi-modal service is not clearly discussed or defined.

For the foregoing problem, embodiments of this application provide a communication method and a communication apparatus, to provide a solution for ensuring synchronous transmission on a plurality of service flows of a multi-modal service.

The following describes method embodiments of this application.

Embodiments of this application may be applied to a scenario in which a same UPF performs transmission on the plurality of service flows for which synchronous transmission needs to be ensured, or may be applied to a scenario in which a plurality of UPFs perform transmission on the plurality of service flows for which synchronous transmission needs to be ensured. The following separately describes solutions in the two scenarios.

Scenario 1: The same UPF performs transmission on the plurality of service flows for which synchronous transmission needs to be ensured.

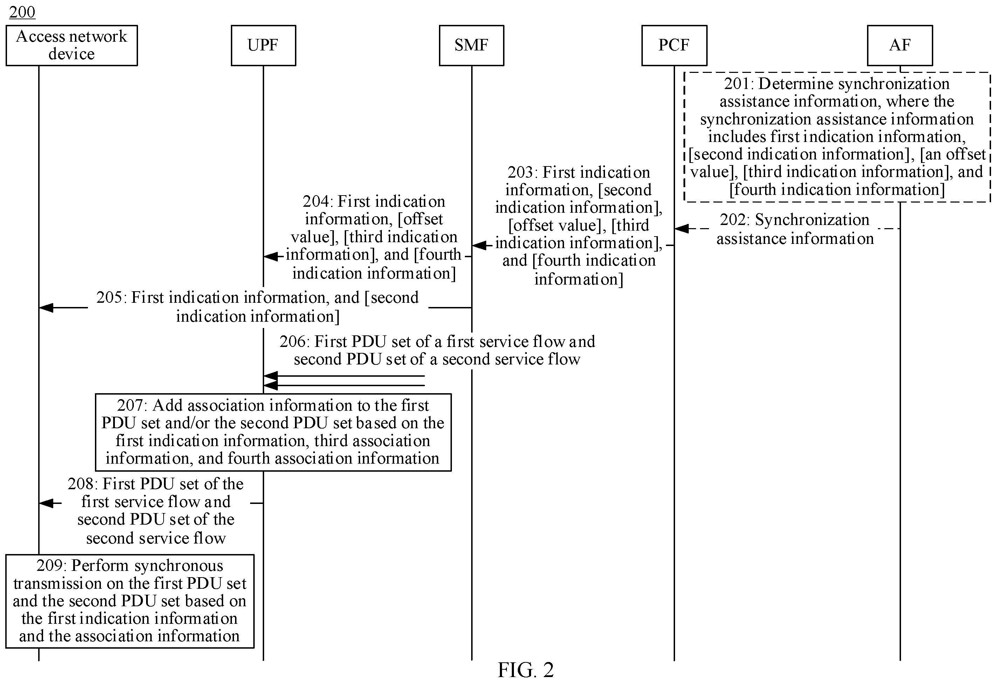

FIG. 2 is a schematic flowchart of a communication method 200 according to an embodiment of this application.

The method 200 may be performed by an access network device, a UPF, an SMF, a PCF, and/or an AF. Unless otherwise specified, the "access network device", the "UPF", the "SMF", the "PCF", or the "AF" may be the access network device, the UPF, the SMF, the PCF, or the AF itself, or may be an apparatus that can support the access network device, the UPF, the SMF, the PCF, or the AF in implementing a function of the access network device, the UPF, the SMF, the PCF, or the AF. For ease of description, the access network device, the UPF, the SMF, the PCF, or the AF is uniformly used for description below.

The method 200 includes at least a part of the following content.

Optionally, in step 201, the AF determines synchronization assistance information.

The synchronization assistance information is used for synchronous transmission on a first service flow and a second service flow. It should be noted that there may be two or more service flows for which synchronous transmission needs to be ensured. In this embodiment of this application, only the first service flow and the second service flow are used as an example to describe a solution in this embodiment of this application. This embodiment of this application may be applied to ensuring synchronous transmission on more service flows. It should be further noted that in this embodiment of this application, the plurality of service flows for which synchronous transmission needs to be ensured may be a plurality of service flows of a same service, or a plurality of service flows of a same application. The plurality of service flows may be a plurality of service flows for a same terminal device, or may be a plurality of service flows for plurality of terminal devices. This is not limited. It should be further noted that embodiments of this application may be applied to ensuring synchronous transmission on the plurality of service flows of the multi-modal service, or may be applied to another scenario with a plurality of service flows for which synchronous transmission needs to be ensured. This is not limited.

The synchronization assistance information may include first indication information. The first indication information indicates that the first service flow is associated with the second service flow. The first service flow is associated with the second service flow, that is, synchronous transmission needs to be ensured between the first service flow and the second service flow.

For example, the first indication information may be flow description information, and is used to determine the first service flow and the second service flow that need to be synchronously processed. For example, the first indication information may include description information such as an IP quintuple and an IP triplet of the first service flow, and description information such as an IP quintuple and an IP triplet of the second service flow. For another example, the first indication information may include an identifier of the first service flow and an identifier of the second service flow, for example, an application identifier of the first service flow and an application identifier of the second service flow. For another example, when the first service flow is a service flow of a first terminal device, and the second service flow is a service flow of a second terminal device, the first indication information may include an identifier of the first service flow, an identifier of a first session to which the first service flow belongs, an identifier of the first terminal device to which the first session belongs, an identifier of the second service flow, an identifier of a second session to which the second service flow belongs, and/or an identifier of the second terminal device to which the second session belongs. For another example, the AF may include a same synchronization identifier in flow description information of the first service flow and flow description information of the second service flow, to indicate that the first service flow is associated with the second service flow, that is, the first service flow and the second service flow that carry the same synchronization identifier are associated.

Optionally, the synchronization assistance information may further include second indication information. The second indication information indicates a requirement for synchronization between the first service flow and the second service flow. For example, the requirement for synchronization may indicate a maximum value of a difference between transmission delays of associated PDU sets between the first service flow and the second service flow, or a requirement for an overall transmission delay of associated PDU sets between the first service flow and the second service flow, namely, a delay upper limit for completing transmission of all the associated PDU sets. For example, transmission on both a PDU set #A of the first service flow and a PDU set #B of the second service flow needs to be completed under the delay requirement corresponding to the requirement for synchronization, namely, a delay requirement from receiving first data packets of the PDU set #A and the PDU set #B to sending last data packets of the PDU set #A and the PDU set #B. When the synchronization assistance information does not include the second indication information, the PCF may determine the requirement for synchronization between the first service flow and the second service flow, or the access network device may independently determine the requirement for synchronization between the first service flow and the second service flow. For example, the access network device may perform transmission on the associated PDU sets strictly based on a same transmission delay.

In addition, it should be noted that there may be two or more PDU sets for which synchronous transmission needs to be ensured in the first service flow and the second service flow. In this embodiment of this application, only a first PDU set and a second PDU set are used as an example to describe the solution in this embodiment of this application. This embodiment of this application may be applied to ensuring synchronous transmission on more associated PDU sets.

Optionally, the synchronization assistance information further includes at least one of the following information: an offset value, third indication information, or fourth indication information.

The offset value is an offset value between association information of associated PDU sets between the first service flow and the second service flow. For example, the PDU set A of the first service flow is associated with the PDU set B of the second service flow, the PDU set A carries association information A, the PDU set B carries association information B, and the offset value is an offset value between the association information A and the association information B. For example, the association information herein may be a real-time transport protocol (real-time transport protocol, RTP) timestamp of the PDU set, a PDU set SN, or another synchronization identifier. The RTP timestamp represents time for generating or a sending the PDU set that carries the timestamp information. The PDU set SN represents a sequence of the PDU set. The synchronization identifier identifies identifier information for synchronizing the PDU set.

It should be noted that when the offset value is carried, the offset value further carries identifier information indicating a reference service flow, that is, the offset value is an offset value between the current service flow and the reference service flow.

The third indication information indicates the UPF to identify the associated PDU sets, that is, identify the associated PDU sets in associated service flows. For example, when the UPF identifies the associated PDU sets by default, the synchronization assistance information may not include the third indication information, or the UPF identifies the associated PDU sets in the associated service flow based on the fourth indication information mentioned below. Optionally, the third indication information further indicates a manner for the UPF to identify the associated PDU sets. When there is only one default identification manner, the third indication information may not indicate the manner for the UPF to identify the associated PDU sets. For example, the manner for the UPF to identify the associated PDU sets may be any one of the following manners: an identification manner based on an RTP timestamp or an identification manner based on a PDU set SN. The identification manner based on the PDU set SN is applicable to a scenario in which an application server (application server, AS) uses an RTP extension header that carries the PDU set SN or a scenario in which an application server uses another protocol header that carries the PDU set SN or a synchronization identifier.

The identification manner based on the RTP timestamp includes at least one of the following manners: PDU sets with a same RTP timestamp are associated, PDU sets with RTP timestamps whose difference is less than or equal to a threshold are associated, PDU sets with RTP timestamps whose difference falls within a threshold range are associated, and PDU sets with RTP timestamps whose difference is equal to an offset value are associated. For a manner in which the PDU sets with the same RTP timestamp are associated, the UPF may perform association identification based on timestamps in RTP headers of downlink data packets in the first service flow and the second service flow, and determine that the PDU sets with the same RTP timestamp are associated. For a manner in which the PDU sets with the RTP timestamps whose difference is less than or equal to the threshold K1 are associated, the UPF may perform association identification based on timestamps in RTP headers of downlink data packets in the first service flow and the second service flow, and determine that the PDU sets with the RTP timestamps whose difference falls within a threshold range (0, K1) are associated. In this manner, the synchronization assistance information may further include the RTP timestamp threshold used to identify a PDU set association relationship. For a manner in which the PDU sets with the RTP timestamps whose difference falls within the threshold range (M1, N1) are associated, the UPF may perform association identification based on timestamps in RTP headers of downlink data packets in the first service flow and the second service flow, and determine that the PDU sets with the RTP timestamps whose difference falls within the threshold range (M1, N1) are associated, where 0<M1<N1. For a manner in which the PDU sets with the RTP timestamps whose difference is equal to the offset value are associated, the UPF may perform association identification based on timestamps in RTP headers of downlink data packets in the first service flow and the second service flow, and determine that the PDU sets with the RTP timestamps whose difference is equal to the offset value are associated. In this manner, the synchronization assistance information may further include the offset value.

The identification manner based on the PDU set SN includes at least one of the following manners: PDU sets with a same PDU set SN are associated, PDU sets with PDU set SNs whose difference is less than or equal to a threshold are associated, PDU sets with PDU set SNs whose difference falls within a threshold range are associated, and PDU sets with PDU set SNs whose difference is equal to an offset value are associated. For a manner in which the PDU sets with the same PDU set SN are associated, the UPF may perform association identification based on PDU set SNs in RTP headers of downlink data packets in the first service flow and the second service flow, and determine that the PDU sets with the same PDU set SN are associated. For a manner in which the PDU sets with the PDU set SNs whose difference is less than or equal to the threshold K2 are associated, the UPF may perform association identification based on PDU set SNs in RTP headers of downlink data packets in the first service flow and the second service flow, and determine that the PDU sets with the PDU set SNs whose difference falls with a threshold range (0, K2) are associated. In this manner, the synchronization assistance information may further include the PDU set SN threshold used to identify a PDU set association relationship. For a manner in which the PDU sets with the PDU set SNs whose difference falls within the threshold range (M2, N2) are associated, the UPF may perform association identification based on PDU set SNs in RTP headers of downlink data packets in the first service flow and the second service flow, and determine that the PDU sets with the PDU set SNs whose difference falls within the threshold range are associated. In this manner, the synchronization assistance information may further include the PDU set SN threshold range (M2, N2) used to identify a PDU set association relationship, where 0<M2<N2. For a manner in which the PDU sets with the PDU set SNs whose difference is equal to the offset value are associated, the UPF may perform association identification based on PDU set SNs in RTP headers of downlink data packets in the first service flow and the second service flow, and determine that the PDU sets with the PDU set SNs whose difference is equal to the offset value are associated. In this manner, the synchronization assistance information may further include the offset value.

In this embodiment of this application, the threshold and the offset value may be interchanged.

The fourth indication information indicates the UPF to mark the associated PDU sets. For example, when the UPF marks the associated PDU sets by default, the synchronization assistance information may not include the fourth indication information. Optionally, the fourth indication information further indicates a manner for the UPF to mark the associated PDU sets. Optionally, the fourth indication information further indicates the UPF to identify the associated PDU sets. When there is only one default marking manner, the fourth indication information may not indicate the manner for the UPF to mark the associated PDU sets. For example, the manner for the UPF to mark the associated PDU sets is any one of the following manners: adding same association information to the associated PDU sets, where the association information herein may be RTP timestamps, PDU set SNs, or other synchronization identifiers of the PDU sets.

Optionally, in step 202, the AF sends the synchronization assistance information to the PCF, and correspondingly, the PCF receives the synchronization assistance information from the AF.

Step 203: The PCF sends the first indication information to the SMF based on the received synchronization assistance information, and correspondingly, the SMF receives the first indication information from the PCF.

Optionally, when the synchronization assistance information further includes the second indication information, the offset value, the third indication information, or the fourth indication information, the PCF further sends the second indication information, the offset value, the third indication information, or the fourth indication information to the SMF, and correspondingly, the SMF further receives the second indication information, the offset value, the third indication information, or the fourth indication information from the PCF.

Optionally, if the PCF does not receive the synchronization assistance information from an AF side, the synchronization assistance information may be a local configuration from a PCF side. To be specific, the PCF generates the first indication information, the second indication information, the offset value, the third indication information, or the fourth indication information. For example, an operator configures the foregoing information for the multi-modal service, and the information may be an agreement between the operator and a third-party application vendor.

Step 204: The SMF sends the first indication information to the UPF based on the information received from the PCF, and correspondingly, the UPF receives the first indication information from the SMF.

Optionally, when the SMF further receives the offset value, the third indication information, or the fourth indication information, the SMF further sends the offset value, the third indication information, or the fourth indication information to the UPF, and correspondingly, the UPF further receives the offset value, the third indication information, or the fourth indication information from the SMF.

It should be noted that a form of the first indication information, the offset value, the third indication information, or the fourth indication information sent by the SMF to the UPF may be the same as or different from a form of the first indication information, the offset value, the third indication information, or the fourth indication information received by the SMF from the PCF. This is not limited.

Step 205: The SMF sends the first indication information to the access network device, and correspondingly, the access network device receives the first indication information from the SMF.

Optionally, when the SMF further receives the second indication information, the SMF further sends the second indication information to the access network device, and correspondingly, the access network device further receives the second indication information from the SMF.

It should be noted that a form of the first indication information or the second indication information sent by the SMF to the access network device may be the same as or different from a form of the first indication information or the second indication information received by the SMF from the PCF. This is not limited.

Step 206: The UPF receives the first PDU set of the first service flow and the second PDU set of the second service flow.

The first PDU set carries third association information, the second PDU set carries fourth association information, and the third association information and the fourth association information are used by the UPF to determine that the first PDU set is associated with the second PDU set.

In an example, the third association information is a first PDU set SN carried in the first PDU set, and the fourth association information is a second PDU set SN carried in the second PDU set.

In another example, the third association information is a first RTP timestamp carried in the first PDU set, and the fourth association information is a second RTP timestamp carried in the second PDU set. The first RTP timestamp may represent time for generating or sending the first PDU set, to be specific, represent time for generating the first PDU set on an application server side or time for sending the first PDU set from an application server side. The second RTP timestamp may represent time for generating or sending the second PDU set, to be specific, represent time for generating the second PDU set on an application server side or time for sending the second PDU set from an application server side.

Before this, the UPF determines, based on the received first indication information, that the first service flow is associated with the second service flow.

Step 207: The UPF adds association information to the first PDU set and/or the second PDU set based on the first indication information, the third association information, and the fourth association information.

The UPF adds the association information to the first PDU set and/or the second PDU set, so that the access network device determines that the first PDU set is associated with the second PDU set.

The first indication information indicates that the first service flow is associated with the second service flow. The first service flow is associated with the second service flow, that is, synchronous transmission needs to be ensured between the first service flow and the second service flow. The first indication information may be specifically the identifier of the first service flow and the identifier of the second service flow. For example, the first indication information may be flow description information of the first service flow and flow description information of the second service flow, for example, service data flow templates (templates) (service data flow templates, SDFs), to ensure that the UPF determines the two associated service flows based on the SDF templates of the first service flow and the second service flow.

In a possible implementation, the UPF adds the association information to a GTP-U layer, for example, a GTP-U header, of a data packet included in the first PDU set and/or a GTP-U layer, for example, a GTP-U header, of a data packet included in the second PDU set. Information at the GTP-U layer is information that can be obtained by the access network device. Therefore, the access network device can determine, based on the association information to be added the UPF to the first PDU set and/or the second PDU set, that the first PDU set is associated with the second PDU set. For example, that the UPF adds the association information to the GTP-U header of the first PDU set and/or the GTP-U header of the second PDU set may mean that the UPF adds the association information to the GTP-U header of the data packet corresponding to the first PDU set and/or the GTP-U header of the data packet corresponding to the second PDU set.

A specific implementation in which the UPF adds the association information to the first PDU set and/or the second PDU set based on the first indication information, the third association information, and the fourth association information is not limited in embodiments of this application. In a possible implementation, the UPF determines, based on the first indication information, that the first service flow is associated with the second service flow; the UPF determines, based on the third association information and the fourth association information, that the first PDU set is associated with the second PDU set; and the UPF adds the association information to the associated first PDU set and/or the associated second PDU set.

A specific implementation in which the UPF determines, based on the third association information and the fourth association information, that the first PDU set is associated with the second PDU set is not limited in embodiments of this application.

In a possible implementation, when the third association information is the same as the fourth association information, a difference between the third association information and the fourth association information is less than or equal to a threshold, a difference between the third association information and the fourth association information falls within a threshold range, or a difference between the third association information and the fourth association information is equal to an offset value, the UPF determines that the first PDU set of the first service flow is associated with the second PDU set of the second service flow.

When the UPF receives the third indication information from the SMF, the UPF determines, based on the third indication information, the third association information, and the fourth association information, that the first PDU set is associated with the second PDU set. For example, when the third indication information further indicates the manner for the UPF to identify the associated PDU sets, the UPF identifies, based on the third association information and the fourth association information in the manner indicated by the third indication information, that the first PDU set is associated with the second PDU set. For example, when the third association information is the first RTP timestamp carried in the first PDU set, the fourth association information is the second RTP timestamp carried in the second PDU set, and the third indication information indicates that the PDU sets with the same RTP timestamp are associated, when the first RTP timestamp is the same as the second RTP timestamp, the UPF determines that the first PDU set is associated with the second PDU set.

A specific implementation in which the UPF adds the association information to the first PDU set and/or the second PDU set is not limited in embodiments of this application.

In a possible implementation, the UPF adds first association information to the first PDU set, and adds second association information to the second PDU set. The first association information is the same as the second association information. In other words, the UPF adds the same association information to the first PDU set and the second PDU set that are associated. For example, the first association information and the second association information may be PDU set SNs, timestamps, or other synchronization identifiers.

In another possible implementation, the UPF adds, to the first PDU set and/or the second PDU set, the association information indicating an offset value between identification information of the associated PDU sets between the first service flow and the second service flow. The UPF adds the association information to the first PDU set, and does not add the association information to the second PDU set. The association information includes the identifier of the second service flow and the offset value between the identification information of the associated PDU sets between the first service flow and the second service flow. Alternatively, the UPF adds the association information to the second PDU set, and does not add the association information to the first PDU set. The association information includes the identifier of the first service flow and the offset value between the identification information of the associated PDU sets between the first service flow and the second service flow. Alternatively, the UPF adds first association information to the first PDU set, and adds second association information to the second PDU set. The first association information includes an identifier of a reference service flow and a first offset value, the first offset value is an offset value between identification information of associated PDU sets between the first service flow and the reference service flow, the second association information includes the identifier of the reference service flow and a second offset value, and the second offset value is an offset value between identification information of associated PDU sets between the second service flow and the reference service flow. Alternatively, the UPF adds first association information to the first PDU set, and adds second association information to the second PDU set. The first association information includes the identifier of the second service flow and the offset value between the identification information of the associated PDU sets between the first service flow and the second service flow, and the second association information includes the identifier of the first service flow and the offset value between the identification information of the associated PDU sets between the first service flow and the second service flow. Alternatively, the UPF adds first association information to the first PDU set, and adds second association information to the second PDU set. The first association information includes first identifier information, and the second association information includes the first identifier information, so that the access network device determines, based on the same first identifier information carried in the first service flow and the second service flow that are associated, that the first PDU set is associated with the second PDU set, and perform synchronous transmission on the first PDU set and the second PDU set that are associated.

For the foregoing implementation, the UPF may further add first identification information to the first PDU set and add second identification information to the second PDU set, where the first identification information is the same as the third association information, and the second identification information is the same as the fourth association information. In addition, when the UPF does not receive, from the SMF, the offset value between the identification information of the associated PDU sets between the first service flow and the second service flow, the UPF may further determine, based on the third association information and the fourth association information, the offset value between the identification information of the associated PDU sets between the first service flow and the second service flow.

When the UPF receives the fourth indication information from the SMF, and the fourth indication information indicates the manner for mark the associated PDU sets, the UPF may add the association information to the first PDU set and/or the second PDU set based on the manner indicated by the fourth indication information.

Step 208: The UPF sends the first PDU set of the first service flow and the second PDU set of the second service flow to the access network device, and correspondingly, the access network device receives the first PDU set of the first service flow and the second PDU set of the second service flow that are from the UPF.

The association information used to determine that the first PDU set is associated with the second PDU set is added to the first PDU set and/or the second PDU set.

Step 209: The access network device performs synchronous transmission on the first PDU set and the second PDU set based on the first indication information and the association information carried in the first PDU set and/or the second PDU set.

Performing synchronous transmission on the first PDU set and the second PDU set may be understood as follows: A difference between transmission delays of the first PDU set and the second PDU set is less than or equal to x ms, where x may be 0 or another value that does not affect service experience; or may be understood as follows: transmission on the first PDU set and the second PDU set is completed, that is, a delay upper limit from time when first pieces of data of the first PDU set and the second PDU set arrive at an access network device side to time when transmission of all data packets or last data packets of the first PDU set and the second PDU set is completed is x ms, and x ms is a joint or total delay budget for transmission on the first PDU set and the second PDU set, where x is a value that does not affect service experience, and x may be indicated by a core network side (for example, the AF, the PCF, or the SMF) to the access network device by using the second indication information, or may be preconfigured in the access network device, or may be determined by the access network device. This is not limited.

In a possible implementation, when the access network device obtains the second indication information from the SMF, the access network device may perform synchronous transmission on the first PDU set and the second PDU set based on the first indication information, the association information carried in the first PDU set and/or the second PDU set, and the second indication information, where synchronous transmission meets the requirement for synchronization indicated by using the second indication information. Optionally, the requirement for synchronization indicated by the second indication information may alternatively be configured on a RAN side.

An implementation in which the access network device performs synchronous transmission on the first PDU set and the second PDU set based on the first indication information and the association information carried in the first PDU set and/or the second PDU set is not limited in embodiments of this application.

In a possible implementation, the access network device determines, based on the first indication information, that the first service flow is associated with the second service flow; determines, based on the association information carried in the first PDU set and/or the second PDU set, that the first PDU set is associated with the second PDU set; and performs synchronous transmission on the first PDU set and the second PDU set that are associated.

A specific implementation in which the access network device determines that the first PDU set is associated with the second PDU set is not limited in embodiments of this application.

In a possible implementation, when the UPF adds the same association information to the associated PDU sets, that the first PDU set and/or the second PDU set carry/carries the association information includes: the first PDU set carries the first association information, and the second PDU set carries the second association information. When the first association information is the same as the second association information, the access network device determines that the first PDU set is associated with the second PDU set. For example, the first association information and the second association information may be PDU set SNs, timestamps, or other synchronization identifiers.

In another possible implementation, when the UPF adds, to the first PDU set and/or the second PDU set, the association information indicating the offset value between the identification information of the associated PDU sets between the first service flow and the second service flow, the association information is the offset value, the first PDU set carries the first identification information, and the second PDU set carries the second identification information. When a difference between the first identification information and the second identification information is equal to the offset value indicated by using the association information, the access network device determines that the first PDU set is associated with the second PDU set.

For a manner of carrying the offset value in the first identification information, the second identification information, and the first PDU set and/or the second PDU set, refer to step 207.

It should be noted that as described in steps 207 and 208, the UPF may send, to the access network device by using a user plane, the offset value between the identification information of the associated PDU sets between the first service flow and the second service flow, or may send, to the access network device by using signaling of a control plane, the offset value that is between the identification information of the associated PDU sets between the first service flow and the second service flow and that is determined by the UPF. This is not limited. In other words, the first PDU set and/or the second PDU set may not carry the offset value, and the access network device determines, based on the offset value received from the control plane, the first identification information, and the second identification information, that the first PDU set is associated with the second PDU set. In this case, the first identification information and the second identification information may also be respectively referred to as the first association information and the second association information.

In the method 200, the UPF may identify and add the association information to the associated PDU sets between the first service flow and the second service flow. The access network device may determine, based on the association information to be added the UPF, the associated PDU sets between the first service flow and the second service flow, and perform synchronous transmission on the associated PDU sets. This ensures synchronous transmission on the plurality of service flows.

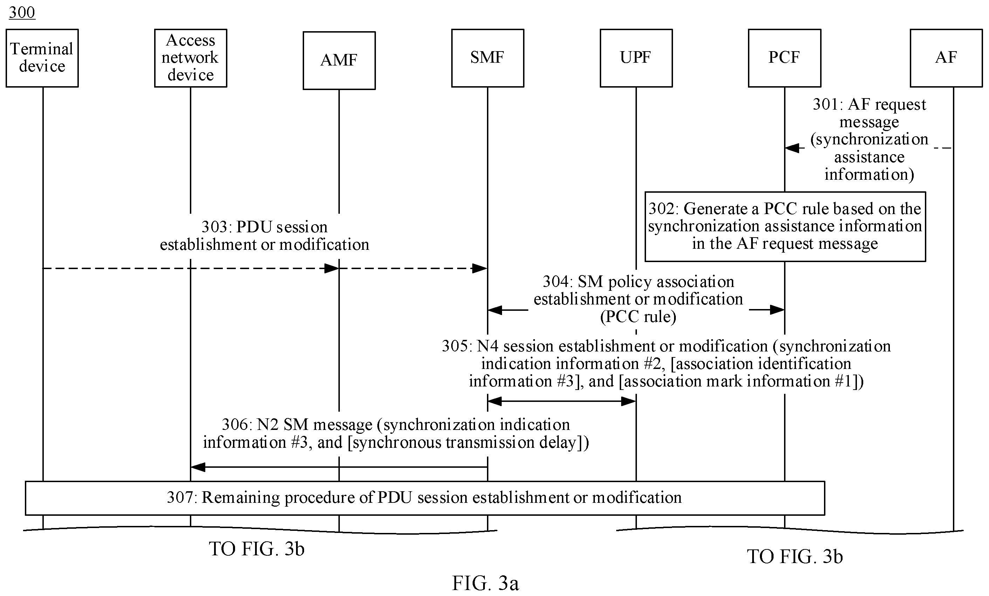

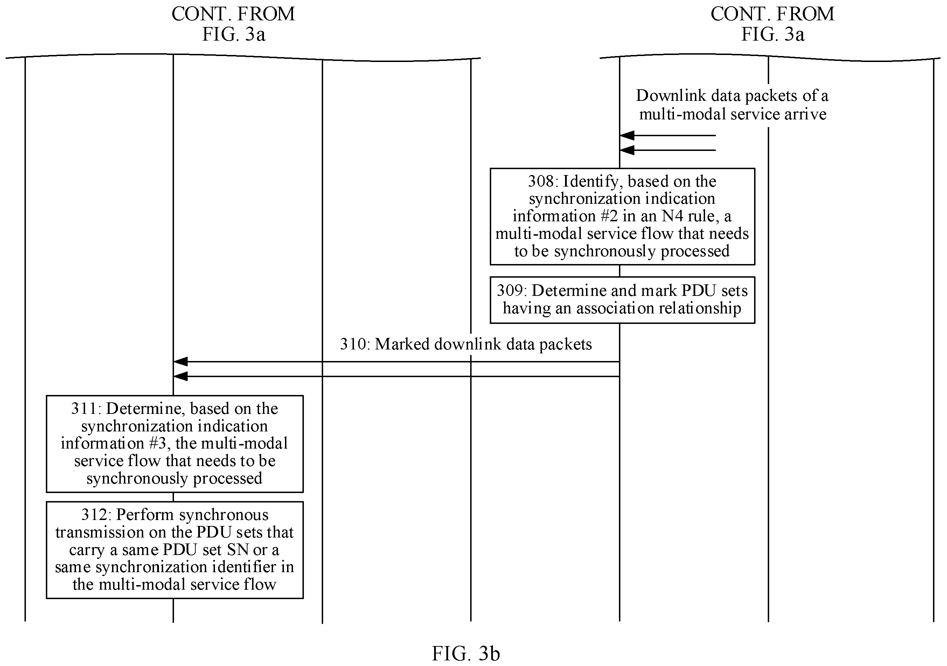

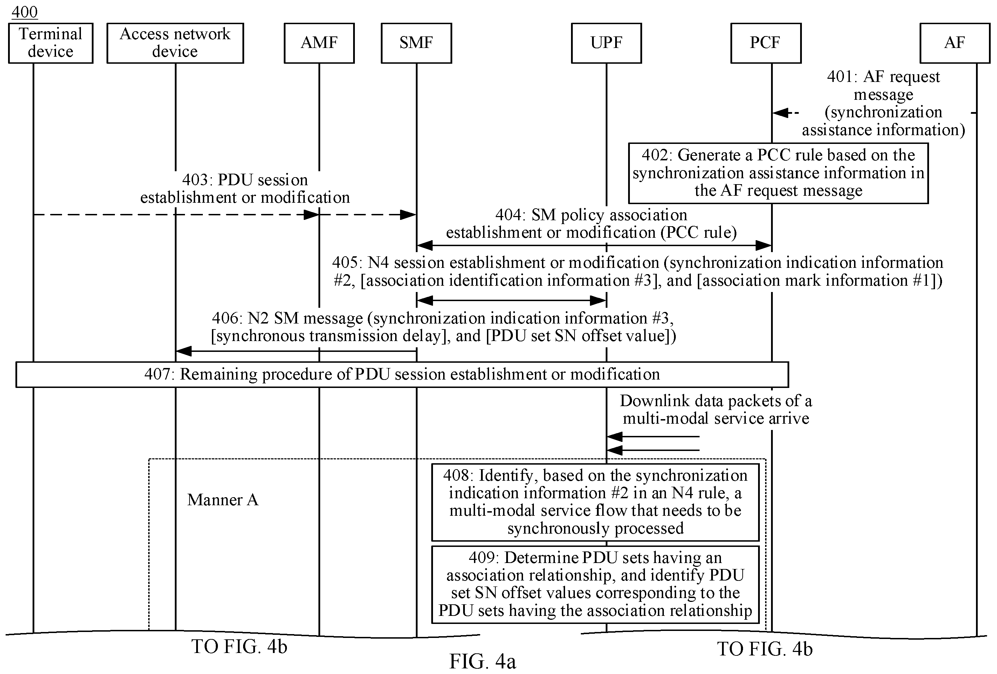

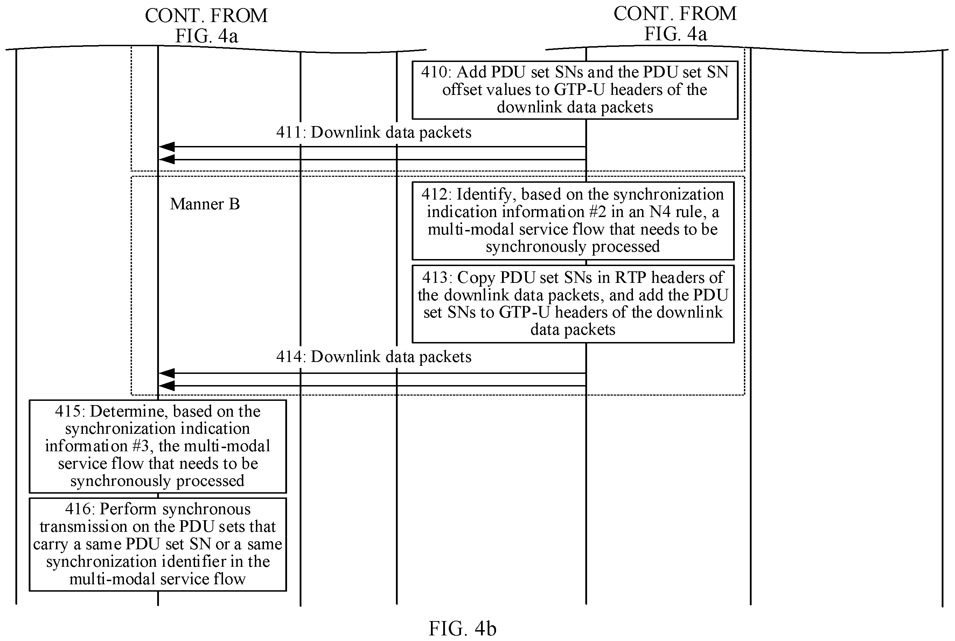

With reference to FIG. 3a and FIG. 3b and FIG. 4a and FIG. 4b, the following describes in detail a case in which the same UPF performs transmission on the plurality of service flows for which synchronous transmission needs to be ensured. In FIG. 3a and FIG. 3b and FIG. 4a and FIG. 4b, flow description information, synchronization indication information #1, synchronization indication information #2, and synchronization indication information #3 of a multi-modal service flow may correspond to the foregoing first indication information, information about a requirement for synchronization and a synchronous transmission delay may correspond to the foregoing second indication information, association identification information #1, association identification information #2, and association identification information #3 may correspond to the foregoing third indication information, and association mark information #1 may correspond to the foregoing fourth indication information.

FIG. 3a and FIG. 3b are a schematic flowchart of a communication method 300 according to an embodiment of this application.

In the method 300, a UPF can identify, based on synchronization assistance information from an AF, a plurality of service flows that need to be synchronously processed and an association relationship among PDU sets among the plurality of service flows, mark the association relationship, and then send the PDU sets to the access network device. The access network device performs synchronous transmission on the PDU sets having the association relationship. This ensures synchronous transmission on a multi-modal service flow.

Step 301: The AF sends an AF request message to a PCF, and correspondingly, the PCF receives the AF request message from the AF.

The AF request message includes the synchronization assistance information. The synchronization assistance information is used for synchronous transmission on the plurality of service flows.

The synchronization assistance information may include flow description information of the multi-modal service flow. The flow description information of the multi-modal service flow is used to determine the multi-modal service flow that needs to be synchronously processed. For example, the flow description information of the multi-modal service flow may include description information such as an IP quintuple or an IP triplet that corresponds to each of the multi-modal service flows that need to be synchronously processed.

Optionally, the synchronization assistance information may further include association identification information #1. The association identification information #1 is used by a 5GS (for example, the UPF or the access network device) to determine the association relationship among the PDU sets among the multi-modal service flow. For example, the association identification information #1 may indicate a manner for identifying the association relationship among the PDU sets among the multi-modal service flow. For specific descriptions, refer to the third indication information in step 201.

Optionally, the synchronization assistance information may further include information about a requirement for synchronization. The information about the requirement for synchronization represents a requirement of an application layer for synchronization among the multi-modal service flow. For example, the information about the requirement for synchronization may be that a difference between transmission delays of the associated PDU sets among the multi-modal service flow at a granularity of a PDU set is less than or equal to x ms, or a delay budget for joint transmission on the associated PDU sets among the multi-modal service flow is x ms, that is, transmission on the associated PDU sets among the multi-modal service flow is completed within x ms.

It should be noted that if the AF is in a trusted domain (for example, the AF is an AF deployed by an operator), the AF may directly interact with the PCF. To be specific, the AF invokes a service interface of the PCF, for example, an Npcf_PolicyAuthorization service interface, and sends the AF request message to the PCF. If the AF is in an untrusted domain (for example, the AF is a third-party AF), the AF interacts with the PCF via an NEF. To be specific, the AF invokes a service interface of the NEF, for example, an Nnef_AFSessionWithQoS service interface, and sends the AF request message to the NEF. Then, the NEF invokes a service interface of the PCF, for example, an Npcf_PolicyAuthorization service interface, and sends the AF request message to the PCF.

It should be noted that step 301 is optional.

Step 302: The PCF generates a PCC rule based on the synchronization assistance information in the AF request message. Optionally, the PCF may further generate the PCC rule according to a local policy.

The PCC rule may include synchronization indication information #1. The synchronization indication information #1 is used to determine the multi-modal service flow that needs to be synchronously processed. For example, the PCC rule may be a PCC rule at a service flow granularity, and a PCC rule corresponding to the multi-modal service flow that needs to be synchronously processed may include the same synchronization indication information #1. In other words, the multi-modal service flow corresponding to the PCC rule that carries the synchronization indication information #1 is associated, and needs to be synchronously processed. To be specific, service flows corresponding to the PCC rule that carries the synchronization indication information #1 are the multi-modal service flow that serves a same service, and the service flows need to be associated and synchronously processed at a PDU set granularity. An implementation of the synchronization indication information #1 is not limited in embodiments of this application. For example, the synchronization indication information #1 may be an IP quintuple or an IP triplet respectively corresponding to the multi-modal service flow that needs to be synchronously processed. For another example, the synchronization indication information #1 may be multi-modal service identifier information or other identifier information.

Optionally, the PCC rule may further include the requirement for synchronization. Specifically, the requirement for synchronization may be included in a PDU set QoS parameter, and the PDU set QoS parameter is a QoS parameter for the PDU set granularity. The requirement for synchronization may include a synchronous transmission delay. The synchronous transmission delay may be a delay upper limit for transmission on the associated PDU sets among the multi-modal service flow, namely, a delay budget for joint transmission on the associated PDU sets among the multi-modal service flow, or a difference between transmission delays between the associated PDU sets. The synchronous transmission delay may also be described as a delay requirement for joint transmission on the PDU sets among multi-modal service flow, a delay upper limit for transmission on the PDU sets across the multi-modal service flow, or an upper limit of a difference between the transmission delays of the associated PDU sets among the multi-modal service flow. The PDU set QoS parameter may further include another conventional parameter, and details are not described herein. The PCC rule may include one or more groups of PDU set QoS parameters. When the PCC rule does not include the synchronous transmission delay, the access network device may independently determine the synchronous transmission delay between the multi-modal service flow. For example, the access network device may perform transmission on the associated PDU sets strictly based on the same transmission delay. For example, the access network device ensures that the difference between the transmission delays of the associated PDU sets is 0.

Optionally, the PCC rule may further include association identification information #2. The association identification information #2 indicates a manner for identifying the association relationship among the PDU sets among the multi-modal service flow. For a specific description, refer to the description of the association identification information #1. For example, when there is only one default identification manner, the PCC rule may not include the association identification information #2.

Step 303: When a terminal device initiates a PDU session establishment or modification procedure, the terminal device sends a PDU session establishment request or a PDU session modification request to an AMF, and the AMF sends the PDU session establishment request or the PDU session modification request to an SMF, to trigger the SMF to initiate a session management (session management, SM) policy association establishment or modification procedure.

Step 303 is optional.

Step 304: The PCF sends the PCC rule to the SMF, and correspondingly, the SMF receives the PCC rule from the PCF.

The PCC rule may be the PCC rule at the service flow granularity. In this case, the PCF sends a plurality of PCC rules to the SMF, and the plurality of PCC rules respectively correspond to a plurality of multi-modal service flows that need to be synchronously processed. For the description of the PCC rule, refer to step 302.

In a possible implementation, when the terminal device initiates the PDU session establishment or modification procedure, that is, when step 303 is performed before step 304, after receiving the PDU session establishment request or the PDU session modification request, the SMF actively initiates the SM policy association establishment or modification procedure, to obtain the PCC rule from the PCF.

In another possible implementation, the PCF initiates a session management policy association modification procedure, and sends the PCC rule to the SMF, to trigger a PDU session modification procedure. In this case, step 303 may not be performed.

Step 305: The SMF provides an N4 rule for the UPF according to the received PCC rule by using an N4 session establishment or modification procedure. Optionally, the SMF may further provide the N4 rule for the UPF according to a local policy.

The N4 rule may include synchronization indication information #2. The synchronization indication information #2 is used to determine the multi-modal service flow that needs to be synchronously processed. An implementation of the synchronization indication information #2 is not limited in embodiments of this application. For example, the synchronization indication information #2 may be IP quintuple or IP triplet information corresponding to the multi-modal service flow that needs to be synchronously processed, or SDF template information corresponding to the multi-modal service flow. For another example, the synchronization indication information #2 may be multi-modal service identifier information or other identifier information. For another example, the synchronization indication information #2 may be a QFI of the multi-modal service flow that needs to be synchronously processed.

The synchronization indication information #1 may be the same as or may be different from the synchronization indication information #2. For example, the synchronization indication information #1 may be an IP quintuple or an IP triplet corresponding to the multi-modal service flow that needs to be synchronously processed, and the synchronization indication information #2 may be a QFI of the multi-modal service flow that needs to be synchronously processed. For example, both the synchronization indication information #1 and the synchronization indication information #2 are multi-modal service identifier information or other identifier information.

It should be noted that when the multi-modal service flow that needs to be synchronously processed is a service flow sent to a plurality of terminal devices, that is, when the plurality of service flows of the plurality of terminal devices need to be synchronously processed, the synchronization indication information #2 further includes information that uniquely determines a terminal device, for example, an identifier of a PDU session of the terminal device and/or an identifier of the terminal device.

Optionally, the N4 rule may further include association identification information #3. The association identification information #3 indicates a manner for identifying the association relationship among the PDU sets among the multi-modal service flow. For a specific description, refer to the description of the association identification information #1. For example, when there is only one default identification manner or the identification manner is preconfigured on a UPF side, the N4 rule may not include the association identification information #3.

Optionally, the N4 rule may further include association mark information #1. The association mark information #1 indicates a manner for marking the associated PDU sets among the multi-modal service flow. The marking manner may include at least one of the following: adding a same PDU set SN to the associated PDU sets, or adding a same synchronization identifier to the associated PDU sets. For example, when there is only one default marking manner, the N4 rule may not include the association mark information #1. The synchronization identifier may be a synchronization identifier other than the PDU set SN.

It should be noted that the association identification information #3 and the association mark information #1 may be one piece of information, or may be two pieces of independent information.

Step 306: The SMF sends an N2 session management message to the access network device based on the received PCC rule. Optionally, the SMF may further send the N2 session management message to the access network device according to a local policy.

The N2 session management message is specifically the N2 session management message sent by the SMF to the RAN via the AMF. For example, the SMF may invoke Namf_Communication_N1N2MessageTransfer to send the information to an AMF side, and then the AMF sends the information to the RAN side by using an N2 session request message.

The N2 session management message includes the PDU set QoS parameter and synchronization indication information #3.

The PDU set QoS parameter is a QoS parameter used for a PDU set granularity.

The synchronization indication information #3 is used to determine the multi-modal service flow that needs to be synchronously processed. An implementation of the synchronization indication information #3 is not limited in embodiments of this application. For example, the synchronization indication information #3 may be multi-modal service identifier information or other identifier information. For another example, the synchronization indication information #3 may be a QFI of the multi-modal service flow that needs to be synchronously processed.

It should be noted that when the multi-modal service flow that needs to be synchronously processed is a service flow sent to a plurality of terminal devices, that is, when the plurality of service flows of the plurality of terminal devices need to be synchronously processed, the synchronization indication information #3 further includes information that uniquely determines a terminal device, for example, an identifier of a PDU session of the terminal device and/or identifier information of the terminal device.

Optionally, the PDU set QoS parameter may further include the synchronous transmission delay. The synchronous transmission delay may be the delay upper limit for transmission on the associated PDU sets among the multi-modal service flow, or the delay budget for joint transmission on the associated PDU sets, or the difference between the transmission delays between the associated PDU sets. The synchronous transmission delay may also be described as a delay requirement for joint transmission on the PDU sets among the multi-modal service flow, a delay upper limit for transmission on the associated PDU sets across the multi-modal service flow, or an upper limit of a difference between the transmission delays of the associated PDU sets among the multi-modal service flow. When the PDU set QoS parameter does not include the synchronous transmission delay, the access network device may independently determine the synchronous transmission delay between the multi-modal service flow. For example, the access network device may perform transmission on the associated PDU sets strictly based on the same transmission delay.

Step 307: Each network element or device performs a remaining procedure of the PDU session establishment or modification procedure. For a specific procedure, refer to the conventional technology, for example, section 4.3.2.1 in TS 23.502. Details are not described herein.

Step 308: When downlink data packets of the multi-modal service arrive at the UPF, the UPF identifies, according to the N4 rule from the SMF, the multi-modal service flow that needs to be synchronously processed.

Specifically, the UPF may identify, based on the synchronization indication information #2 in the N4 rule, the multi-modal service flow that needs to be synchronously processed.

Step 309: The UPF performs association identification on PDU sets among the multi-modal service flow that needs to be synchronously processed, determines the PDU sets having the association relationship, and marks the PDU sets having the association relationship.

In a possible implementation, when the N4 rule includes the association identification information #3, the UPF may perform, based on the association identification information #3, association identification on the PDU sets among the multi-modal service flow that needs to be synchronously processed, and determine the PDU sets having the association relationship.

For example, when the association identification information #3 indicates an identification manner based on an RTP timestamp, the UPF determines, based on timestamps carried in RTP headers of downlink data packets in the multi-modal service flow, that the PDU sets with a same timestamp are associated.

For another example, when the association identification information #3 indicates an identification manner based on a difference between RTP timestamps, the UPF determines, based on timestamps carried in RTP headers of downlink data packets in the multi-modal service flow, that the PDU sets with timestamps whose difference falls within a threshold range are associated. It should be noted that the threshold range herein may be within K1, (0, K1), or (M1, N1), where 0<M1<N1.

For another example, when the association identification information #3 indicates an identification manner based on a PDU set SN, the UPF determines, based on PDU set SNs carried in RTP extension headers of downlink data packets in the multi-modal service flow, that PDU sets with a same PDU set SN are associated.

For another example, when the association identification information #3 indicates an identification manner based on a PDU set SN offset value, the UPF determines, based on PDU set SNs carried in RTP extension headers of downlink data packets in the multi-modal service flow, that PDU sets whose PDU set SN offset value falls within a threshold range are associated. It should be noted that the threshold range herein may be within K2, (0, K2), or (M2, N2), where 0<M2<N2.

In another possible implementation, when the N4 rule does not include the association identification information #3, the UPF may perform, based on the default identification manner, association identification on the PDU sets among the multi-modal service flow that needs to be synchronously processed, and determine the PDU sets having the association relationship. The default identification manner may be the identification manner mentioned above, or may be another identification manner. This is not limited.

In another possible implementation, when the N4 rule does not include the association identification information #3, the UPF performs, based on an internal implementation, association identification on the PDU sets among the multi-modal service flow that needs to be synchronously processed, and determine the PDU sets having the association relationship. A specific manner of the internal implementation of the UPF is not limited in embodiments of this application, and may be the identification manner mentioned above, or may be another identification manner.

In a possible implementation, when the N4 rule includes the association mark information #1, the UPF may mark, based on the association mark information #1, the PDU sets having the association relationship.

For example, when the association mark information #1 indicates adding the same PDU set SN to the associated PDU sets, the UPF adds the same PDU set SN to GTP-U headers of downlink data packets corresponding to the associated PDU sets, so that the access network device can determine the associated PDU sets based on the same PDU set SN.

For another example, when the association mark information #1 indicates adding the same synchronization identifier to the associated PDU sets, the UPF adds the same synchronization identifier to GTP-U headers of downlink data packets corresponding to the associated PDU sets, so that the access network device can determine the associated PDU sets based on the same synchronization identifier.

In another possible implementation, when the N4 rule does not include the association mark information #1, the UPF may mark, based on the default marking manner, the PDU sets having the association relationship. The default marking manner may be the marking manner mentioned above, or may be another marking manner. This is not limited.

In another possible implementation, when the N4 rule does not include the association mark information #1, the UPF may mark, based on an internal implementation, the PDU sets having the association relationship. A specific manner of the internal implementation of the UPF is not limited in embodiments of this application, and may be the marking manner mentioned above, or may be another marking manner.

In addition, the UPF may further identify the downlink data packets, and determine and mark downlink data packets belonging to a same PDU set.

Step 310: The UPF sends the marked downlink data packets to the access network device, and correspondingly, the access network device receives the downlink data packets from the UPF.

Step 311: The access network device determines, based on the synchronization indication information #3 from the SMF, the multi-modal service flow that needs to be synchronously processed.

Step 312: The access network device performs synchronous transmission on the PDU sets that carry the same PDU set SN or the same synchronization identifier in the multi-modal service flow.

In a possible implementation, when the PUD set QoS parameter includes the synchronous transmission delay, the access network device performs, based on the synchronous transmission delay in the PUD set QoS parameter, synchronous transmission on the PDU sets that carry the same PDU set SN or the same synchronization identifier in the multi-modal service flow.

In another possible implementation, when the PUD set QoS parameter does not include the synchronous transmission delay, the access network device may independently determine the synchronous transmission delay between the multi-modal service flow. For example, the access network device may perform transmission on the associated PDU sets strictly based on the same transmission delay.

FIG. 4a and FIG. 4b are a schematic flowchart of a communication method 400 according to an embodiment of this application.

In the method 400, an AF or a UPF may determine an offset value between PDU set SNs corresponding to PDU sets having an association relationship in a plurality of service flows that need to be synchronously processed, and provide the offset value for an access network device. Then, the access network device performs synchronous transmission on the PDU sets having the association relationship based on the received PDU set SN offset value. This ensures synchronous transmission on a multi-modal service flow.

Step 401 to step 405 are the same as step 301 to step 305. For details, refer to step 301 to step 305. Details are not described herein again.

Step 406: An SMF sends an N2 session management message to the access network device based on a received PCC rule. Optionally, the SMF may further send the N2 session management message to the access network device according to a local policy.

The N2 session management message is specifically the N2 session management message sent by the SMF to a RAN via an AMF. For example, the SMF may invoke Namf_Communication_N1N2MessageTransfer to send the information to an AMF side, and then the AMF sends the information to a RAN side by using an N2 session request message.

The N2 session management message includes a PDU set QoS parameter and synchronization indication information #3.

The PDU set QoS parameter is a QoS parameter used for a PDU set granularity.

The synchronization indication information #3 is used to determine the multi-modal service flow that needs to be synchronously processed. An implementation of the synchronization indication information #3 is not limited in embodiments of this application. For example, the synchronization indication information #3 may be multi-modal service identifier information or other identifier information. For another example, the synchronization indication information #3 may be a QFI of the multi-modal service flow that needs to be synchronously processed.

It should be noted that when the multi-modal service flow that needs to be synchronously processed is a service flow sent to a plurality of terminal devices, that is, when the plurality of service flows of the plurality of terminal devices need to be synchronously processed, the synchronization indication information #3 further includes information that uniquely determines a terminal device, for example, an identifier of a PDU session of the terminal device and/or identifier information of the terminal device.

Optionally, the PDU set QoS parameter may further include a synchronous transmission delay. The synchronous transmission delay may be a delay upper limit for transmission on the associated PDU sets among the multi-modal service flow, or a delay budget for joint transmission on the associated PDU sets, or a difference between transmission delays between the associated PDU sets. The synchronous transmission delay may also be described as a delay requirement for joint transmission on the PDU sets among multi-modal service flow, a delay upper limit for transmission on the associated PDU sets across the multi-modal service flow, or an upper limit of a difference between the transmission delays of the associated PDU sets among the multi-modal service flow. When the PDU set QoS parameter does not include the synchronous transmission delay, the access network device may independently determine the synchronous transmission delay between the multi-modal service flow. For example, the access network device may perform transmission on the associated PDU sets strictly based on a same transmission delay.

Optionally, the N2 session management message may further include the PDU set SN offset. The PDU set SN offset value herein is an offset value between PDU set SNs corresponding to associated PDU sets among different service flows. For example, when an application server uses an RTP extension header that carries a PDU set SN or another protocol header that carries a PDU set SN or a synchronization identifier, the AF may determine the offset value between the PDU set SNs corresponding to the associated PDU sets among the multi-modal service flow that needs to be synchronously processed, and provide the offset value for the access network device via the PCF and the SMF.

A manner of setting the PDU set SN offset value is not limited in embodiments of this application.

In an example, a PDU set SN offset value of a service flow may be an offset value of a PDU set SN of the service flow relative to a PDU set SN of a reference flow, and the reference flow may be one of the multi-modal service flow that needs to be synchronously processed. For example, the multi-modal service flow that needs to be synchronously processed includes a service flow #1, a service flow #2, and a service flow #3. The service flow #1 is used as a reference flow. A PDU set A of the service flow #1, a PDU set B of the service flow #2, and a PDU set C of the service flow #3 are associated. A PDU set SN in an RTP header corresponding to the PDU set A is 10, a PDU set SN in an RTP header corresponding to the PDU set B is 15, and a PDU set SN in an RTP header corresponding to the PDU set C is 12. In this case, a PDU set SN offset value in a PDU set QoS parameter of the service flow #1 is 0, a PDU set SN offset value in a PDU set QoS parameter of the service flow #2 is 5, and a PDU set SN offset value in the PDU set QoS parameter of the service flow #3 is 2. It should be noted that it is assumed that the UPF copies a PDU set SN in an RTP header when adding the PDU set SN. If a QoS flow has a data packet that does not carry a PDU set SN, when adding a PDU set SN to the data packet, the UPF correspondingly updates a PDU set SN offset value.

In another example, a PDU set SN offset value of a service flow may include an offset value of a PDU set SN of the service flow relative to a PDU set SN of each of other service flows that need to be synchronously processed. For example, the multi-modal service flow that needs to be synchronously processed includes a service flow #1, a service flow #2, and a service flow #3. A PDU set A of the service flow #1, a PDU set B of the service flow #2, and a PDU set C of the service flow #3 are associated. A PDU set SN in an RTP header corresponding to the PDU set A is 10, a PDU set SN in an RTP header corresponding to the PDU set B is 15, and a PDU set SN in an RTP header corresponding to the PDU set C is 12. In this case, a PDU set QoS parameter of the service flow #1 may include a PDU set SN offset value (namely, 5) of the service flow #1 relative to the service flow #2 and a PDU set SN offset value (namely, 2) of the service flow #1 relative to the service flow #3, a PDU set QoS parameter of the service flow #2 may include a PDU set SN offset value (namely, 5) of the service flow #2 relative to the service flow #1 and a PDU set SN offset value (namely, 3) of the service flow #2 relative to the service flow #3, and a PDU set QoS parameter of the service flow #3 may include a PDU set SN offset value (namely, 2) of the service flow #3 relative to the service flow #1 and a PDU set SN offset value (namely, 3) of the service flow #3 relative to the service flow #2. It should be noted that it is assumed that the UPF copies a PDU set SN in an RTP header when adding the PDU set SN. If a QoS flow has a data packet that does not carry a PDU set SN, when adding a PDU set SN to the data packet, the UPF correspondingly updates a PDU set SN offset value.

Step 407: Each network element or device performs a remaining procedure of a PDU session establishment or modification procedure. For a specific procedure, refer to the conventional technology, for example, section 4.3.2.1 in TS 23.502. Details are not described herein.

Subsequently, there may be two transmission manners of downlink data packets of a multi-modal service, which are separately described below.

### Manner A: Step 408 to step 411

Step 408: When the downlink data packets of the multi-modal service arrive at the UPF, the UPF identifies, according to an N4 rule from the SMF, the multi-modal service flow that needs to be synchronously processed.

Specifically, the UPF may identify, based on synchronization indication information #2 in the N4 rule, the multi-modal service flow that needs to be synchronously processed.

Step 409: The UPF performs association identification on the PDU sets among the multi-modal service flow that needs to be synchronously processed, determines the PDU sets having the association relationship, and identifies PDU Set SN offset values corresponding to the PDU sets having the association relationship. For a manner of setting the PDU set SN offset value, refer to step 406.

For an implementation in which the UPF performs association identification on the PDU sets among the multi-modal service flow that needs to be synchronously processed, and determines the PDU sets having the association relationship, refer to step 309. Details are not described again.

Step 410: Based on an existing manner, the UPF adds PDU set SNs to GTP-U headers of the downlink data packets, and the UPF may further add the PDU set SN offset values to the GTP-U headers of the downlink data packets, so that the access network device can determine the associated PDU sets based on the PDU set SN offset values. In other words, the UPF may send, by using a user plane, the PDU set SN offset values to the access network device in the GTP-U headers of the downlink data packets. For example, if a QoS flow has a data packet that does not carry a PDU set SN, when adding a PDU set SN to the data packet, the UPF correspondingly updates a PDU set SN offset value.

In addition, the UPF may further send the determined PDU set SN offset values to the access network device by using a control plane, namely, via the SMF, so that the access network device can determine the associated PDU sets based on the PDU set SN offset values.

In FIG. 4a and FIG. 4b, an example in which the PDU set SN offset values are sent to the access network device in the GTP-U headers of the downlink data packets is used.

Step 411: The UPF sends the downlink data packets to the access network device, and correspondingly, the access network device receives the downlink data packets from the UPF.

The GTP-U headers of the downlink data packets include the PDU set SN offset values.

In Manner A, the UPF determines the PDU set SN offset values corresponding to the associated PDU sets among the multi-modal service flow that needs to be synchronously processed, and provides the PDU set SN offset values for the access network device.

### Manner B: Step 412 to step 414

Step 412: When the downlink data packets of the multi-modal service arrive at the UPF, the UPF identifies, according to an N4 rule from the SMF, the multi-modal service flow that needs to be synchronously processed.

Specifically, the UPF may identify, based on synchronization indication information #2 in the N4 rule, the multi-modal service flow that needs to be synchronously processed.

Step 413: Optionally, the UPF copies PDU set SNs in RTP headers of the downlink data packets, and adds the PDU set SNs to GTP-U headers of the downlink data packets.

Step 414: The UPF sends the downlink data packets to the access network device, and correspondingly, the access network device receives the downlink data packets from the UPF.

The GTP-U headers of the downlink data packets include the PDU set SNs in the RTP headers.

Manner B may be applied to a scenario in which an application server uses an RTP extension header that carries a PDU set SN. In this scenario, the AF may determine the PDU set SN offset values corresponding to the associated PDU sets among the multi-modal service flow that needs to be synchronously processed, and provide the offset values to the access network device via the PCF and the SMF. For example, the UPF provides the PDU set SN offset values to the access network device by using step 401 to step 406.

In addition, the UPF may further identify the downlink data packets, and determine and mark downlink data packets belonging to a same PDU set.

Step 415 and step 416 may be performed subsequently.

Step 415: The access network device determines, based on the synchronization indication information #3 from the SMF, the multi-modal service flow that needs to be synchronously processed.

Step 416: The access network device performs, based on the PDU set SN offset values from the UPF, association identification on the PDU sets among the multi-modal service flow that needs to be synchronously processed, determines the PDU sets having the association relationship, and performs synchronous transmission on the PDU sets having the association relationship.

The PDU set SN offset values used by the access network device may be provided by the UPF, or may be provided by the AF.

Scenario 2: The plurality of UPFs perform transmission on the plurality of service flows for which synchronous transmission needs to be ensured.

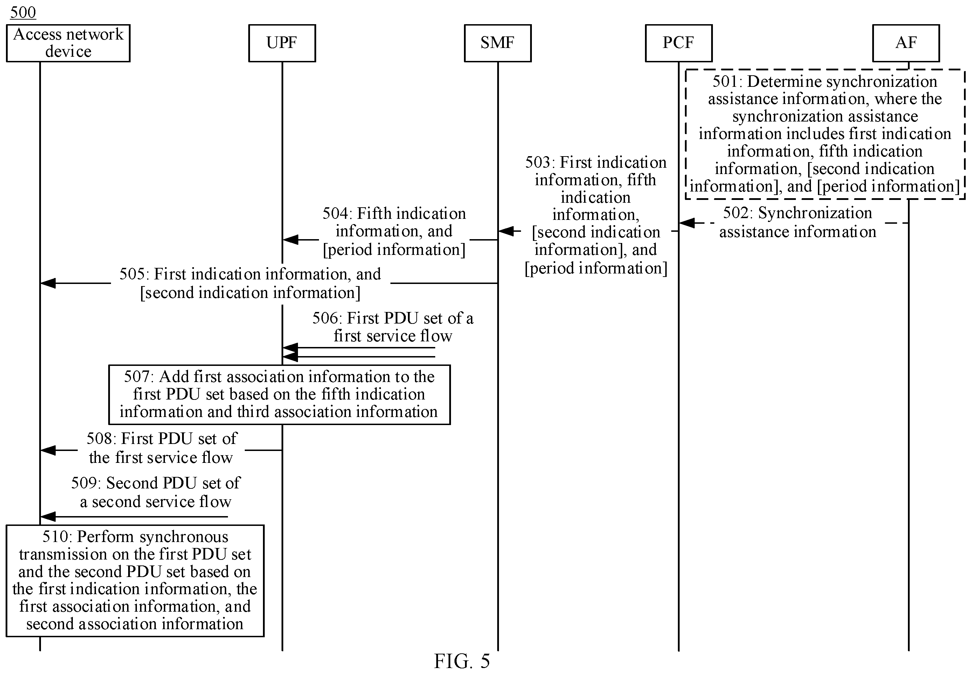

FIG. 5 is a schematic flowchart of a communication method 500 according to an embodiment of this application.

The method 500 may be performed by an access network device, a UPF, an SMF, a PCF, and/or an AF. Unless otherwise specified, the "access network device", the "UPF", the "SMF", the "PCF", or the "AF" may be the access network device, the UPF, the SMF, the PCF, or the AF itself, or may be an apparatus that can support the access network device, the UPF, the SMF, the PCF, or the AF in implementing a function of the access network device, the UPF, the SMF, the PCF, or the AF. For ease of description, the access network device, the UPF, the SMF, the PCF, or the AF is uniformly used for description below.

The method 500 includes at least a part of the following content.

Optionally, in step 501, the AF determines synchronization assistance information.

The synchronization assistance information is used for synchronous transmission on a first service flow and a second service flow. Transmission on the first service flow and the second service flow are performed via different UPFs.

The synchronization assistance information may include first indication information. The first indication information indicates that the first service flow is associated with the second service flow. The first service flow is associated with the second service flow, that is, synchronous transmission needs to be ensured between the first service flow and the second service flow.

Optionally, the synchronization assistance information may further include second indication information. The second indication information indicates a requirement for synchronization between the first service flow and the second service flow.

For descriptions of the service flows for which synchronous transmission needs to be ensured, the first indication information, and the second indication information, refer to step 201.

The synchronization assistance information may further include fifth indication information. The fifth indication information indicates association information to be added the UPF to the first service flow. The association information may be used to determine associated PDU sets between the first service flow and the second service flow.

In a possible implementation, the fifth indication information includes a third timestamp corresponding to the first service flow and a third PDU set SN corresponding to the third timestamp. For example, the third PDU set SN corresponding to the third timestamp may be a PDU set SN that needs to be added by the UPF to a PDU set whose timestamp is the third timestamp.

In another possible implementation, the fifth indication information includes a PDU set SN offset value corresponding to the first service flow, and the PDU set SN offset value corresponding to the first service flow is an offset value of a PDU set SN added by the UPF to a PDU set of the first service flow relative to a PDU set SN added by an AS to the PDU set of the first service flow.

Optionally, the synchronization assistance information may further include period information. The period information indicates a time interval between two adjacent PDU sets of the first service flow.

Optionally, in step 502, the AF sends the synchronization assistance information to the PCF, and correspondingly, the PCF receives the synchronization assistance information from the AF.

Step 503: The PCF sends the first indication information and the fifth indication information to the SMF based on the received synchronization assistance information, and correspondingly, the SMF receives the first indication information and the fifth indication information from the PCF.

Optionally, when the synchronization assistance information further includes the second indication information or the period information, the PCF further sends the second indication information or the period information to the SMF, and correspondingly, the SMF further receives the second indication information or the period information from the PCF.

If the PCF does not receive the synchronization assistance information from an AF side, the synchronization assistance information may be a local configuration from a PCF side. To be specific, the PCF generates the first indication information, the second indication information, the fifth indication information, or the period information.

Step 504: The SMF sends the fifth indication information to the UPF based on the information received from the PCF, and correspondingly, the UPF receives the fifth indication information from the SMF.

Optionally, when the SMF further receives the period information, the SMF further sends the period information to the UPF, and correspondingly, the UPF further receives the period information from the SMF.

It should be noted that a form of the fifth indication information or the period information sent by the SMF to the UPF may be the same as or different from a form of the fifth indication information or the period information received by the SMF from the PCF. This is not limited.

Step 505: The SMF sends the first indication information to the access network device, and correspondingly, the access network device receives the first indication information from the SMF.

Optionally, when the SMF further receives the second indication information, the SMF further sends the second indication information to the access network device, and correspondingly, the access network device further receives the second indication information from the SMF.

It should be noted that a form of the first indication information or the second indication information sent by the SMF to the UPF may be the same as or different from a form of the first indication information or the second indication information received by the SMF from the PCF. This is not limited.

It should be noted that the PCF, the SMF, and the UPF shown in FIG. 5 correspond to the first service flow. The foregoing describes only control plane signaling interaction of the first service flow. For control plane signaling interaction of the second service flow, refer to step 502 to step 505. Details are not described again. The fifth indication information for the second service flow indicates association information to be added the UPF to the second service flow.

Step 506: The UPF receives a first PDU set of the first service flow.

The first PDU set carries third association information. For example, the third association information is a first PDU set SN or a first RTP timestamp carried in the first PDU set.

Step 507: The UPF adds first association information to the first PDU set based on the fifth indication information and the third association information.

In a possible implementation, the UPF adds the first association information to a GTP-U layer of the first PDU set, for example, a GTP-U header. Information at the GTP-U layer is information that can be obtained by the access network device. Therefore, the access network device can determine, based on the first association information to be added the UPF to the first PDU set, a PDU set associated with the first PDU set.

An implementation in which the UPF adds the first association information to the first PDU set based on the fifth indication information and the third association information is not limited in embodiments of this application.

In a possible implementation, when the fifth indication information includes the third timestamp corresponding to the first service flow and the third PDU set SN corresponding to the third timestamp, and the first PDU set carries the first timestamp, the UPF adds the first PDU set SN to the first PDU set based on the third timestamp, the third PDU set SN, and the first timestamp. When the UPF obtains the period information, the UPF adds the first PDU set SN to the first PDU set based on the third timestamp, the third PDU set SN, the first timestamp, and the period information.

For example, the third timestamp is 10:00:00, the third PDU set SN is 10, the period information indicates that the time interval between two adjacent PDU sets of the first service flow is 2s, the first timestamp carried in the first PDU set is 10:00:04, and the first PDU set is a 2^{nd} PDU set after the third timestamp. Therefore, the first PDU set SN added by the UPF to the first PDU set may be 12.

In another possible implementation, when the fifth indication information includes the PDU set SN offset value corresponding to the first service flow and the first PDU set carries a fourth PDU set SN, the UPF adds the first PDU set SN to the PDU set based on the offset value in the fifth indication information and the fourth PDU set SN, where relative to the fourth PDU set SN, the first PDU set SN is offset from the fifth indication information by the offset value.

For example, the offset value in the fifth indication information is 5, the fourth PDU set SN carried in the first PDU set is 12, and the first PDU set SN added by the UPF to the first PDU set may be 17.

It should be noted that the foregoing describes only a manner in which the UPF adds the first association information to the first PDU set of the first service flow. For a manner in which a UPF of the second service flow adds second association information to a second PDU set of the second service flow, refer to step 506 and step 507. Details are not described again.

Step 508: The UPF sends the first PDU set of the first service flow to the access network device, and correspondingly, the access network device receives the first PDU set of the first service flow from the UPF.

The first association information used to determine that the first PDU set is associated with the second PDU set is added to the first PDU set.

Step 509: The access network device receives the second PDU set from the UPF of the second service flow.

The second association information used to determine that the first PDU set is associated with the second PDU set is added to the second PDU set.

Step 510: The access network device performs synchronous transmission on the first PDU set and the second PDU set based on the first indication information, the first association information carried in the first PDU set, and the second association information carried in the second PDU set.

Performing synchronous transmission on the first PDU set and the second PDU set may be understood as follows: A difference between transmission delays of the first PDU set and the second PDU set is less than or equal to x ms, where x may be 0 or another value that does not affect service experience; or may be understood as follows: transmission on the first PDU set and the second PDU set is completed, that is, a delay upper limit from time when first pieces of data of the first PDU set and the second PDU set arrive at an access network device side to time when transmission of all data packets or last data packets of the first PDU set and the second PDU set is completed is x ms, and x ms is a joint or total delay budget for transmission on the first PDU set and the second PDU set, where x is a value that does not affect service experience, and x may be indicated by a core network side (for example, the AF, the PCF, or the SMF) to the access network device by using the second indication information, or may be preconfigured in the access network device, or may be determined by the access network device. This is not limited.

In a possible implementation, when the access network device obtains the second indication information from the SMF, the access network device may perform synchronous transmission on the first PDU set and the second PDU set based on the first indication information, the first association information carried in the first PDU set, the second association information carried in the second PDU set, and the second indication information, where synchronous transmission meets a requirement for synchronization indicated by using the second indication information. Optionally, the requirement for synchronization indicated by the second indication information may alternatively be configured on a RAN side.

An implementation in which the access network device performs synchronous transmission on the first PDU set and the second PDU set based on the first indication information, the first association information carried in the first PDU set, and the second association information carried in the second PDU set is not limited in embodiments of this application.

In a possible implementation, the access network device determines, based on the first indication information, that the first service flow is associated with the second service flow; determines, based on the first association information carried in the first PDU set and the second association information carried in the second PDU set, that the first PDU set is associated with the second PDU set; and performs synchronous transmission on the first PDU set and the second PDU set that are associated.

A specific implementation in which the access network device determines that the first PDU set is associated with the second PDU set is not limited in embodiments of this application. In a possible implementation, when the first association information is the same as the second association information, the access network device determines that the first PDU set is associated with the second PDU set.

In the method 500, the AF may indicate the UPF association information to be added in a service flow, so that the UPF can add the association information to the PDU set based on the association information indicated by the AF. Based on this, the UPF corresponding to the first service flow and the UPF corresponding to the second service flow can ensure that the associated PDU sets between the first service flow and the second service flow carry the same association information, and the access network device can perform synchronous transmission on the PDU sets that carry the same association information. This ensures synchronous transmission on the plurality of service flows.

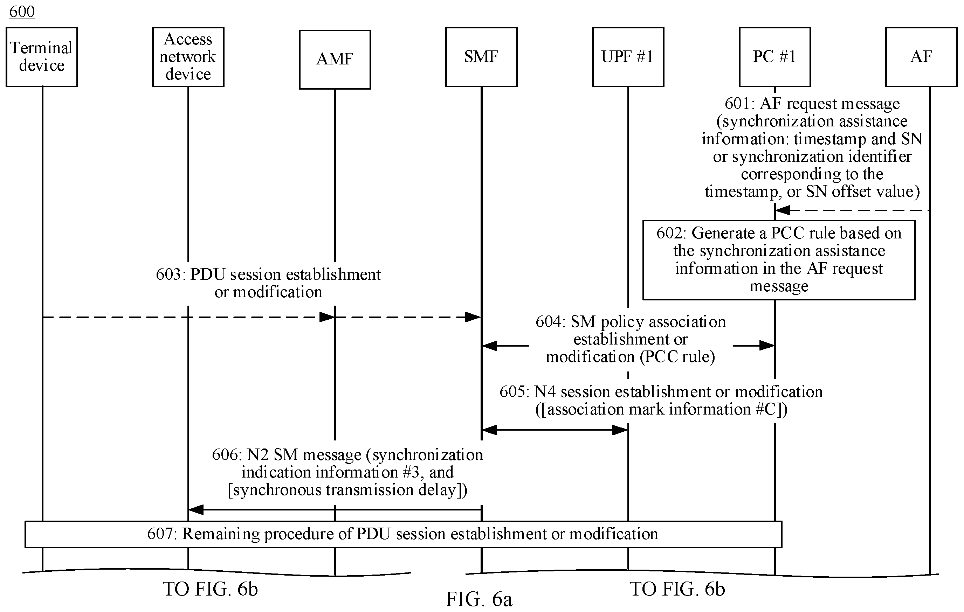

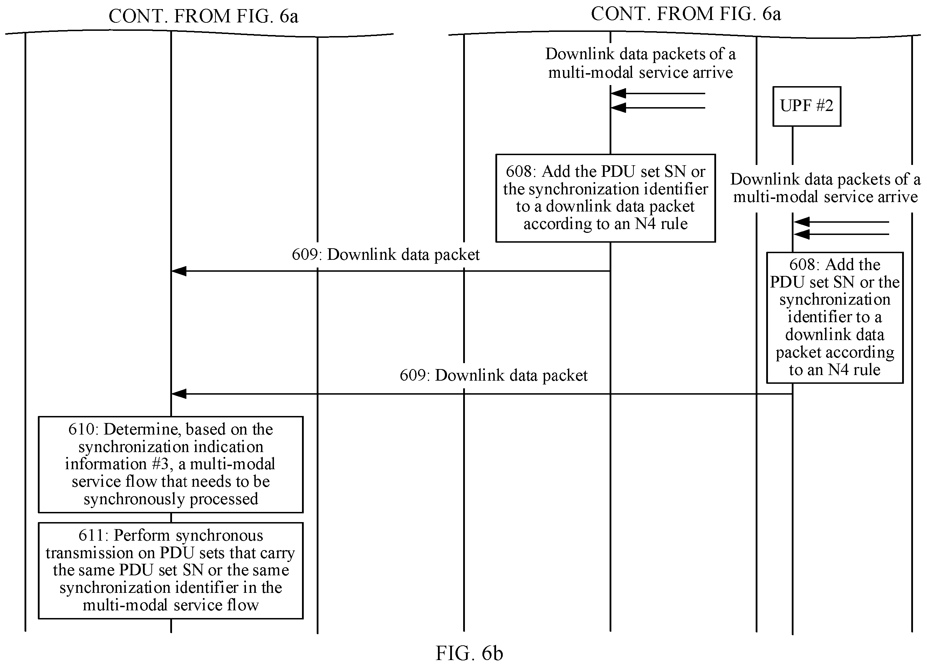

The following describes the method 500 in detail with reference to FIG. 6a and FIG. 6b.

FIG. 6a and FIG. 6b are a schematic flowchart of a communication method 600 according to an embodiment of this application.

Association mark information #A, association mark information #B, and association mark information #C in FIG. 6a and FIG. 6b may correspond to the foregoing fifth indication information, synchronization indication information #3 may correspond to the foregoing first indication information, and a synchronous transmission delay may correspond to the foregoing second indication information.

In the method 600, a UPF needs to correspondingly add a PDU set SN or a synchronization identifier to a downlink data packet according to a specific rule, to ensure that the associated PDU sets among a plurality of service flows on which synchronous transmission needs to be performed and that carry a same PDU set SN or a same synchronization identifier, so that an access network device can perform synchronous transmission on the PDU sets that carry the same PDU set SN or the same synchronization identifier. This ensures synchronous transmission on a multi-modal service flow.

Step 601: An AF sends an AF request message to a PCF, and correspondingly, the PCF receives the AF request message from the AF.

The AF request message includes synchronization assistance information. The synchronization assistance information is used for synchronous transmission on the plurality of service flows.

For step 601, refer to step 301. Different from that in step 301, the synchronization assistance information in step 601 includes the association mark information #A.

In a possible implementation, the association mark information #A may include an RTP timestamp and a PDU set SN or a synchronization identifier corresponding to the RTP timestamp. In this manner, when receiving a downlink data packet that carries the RTP timestamp, the UPF may add the PDU set SN or the synchronization identifier corresponding to the RTP timestamp to a GTP-U header of the downlink data packet.

In another possible implementation, the association mark information #A may include a PDU set SN offset value. The PDU set SN offset value may be a difference between a PDU set SN carried in an RTP extension header of a downlink data packet and a PDU set SN added to a GTP-U header of the downlink data packet. In this manner, when receiving the downlink data packet that carries the PDU set SN, the UPF may determine, based on the PDU set SN carried in the RTP extension header and the PDU set SN offset value, the PDU set SN added to the GTP-U header of the downlink data packet.

Before sending the AF request message to the PCF, the AF may determine or coordinate an association relationship between the RTP timestamp and the PDU set SN or the synchronization identifier corresponding to the RTP timestamp, or determine the PDU set SN offset value corresponding to each multi-modal service flow in the multi-modal service flow that needs to be synchronously processed.

Step 602: The PCF generates a PCC rule based on the synchronization assistance information in the AF request message. Optionally, the PCF may further generate the PCC rule according to a local policy.

For step 602, refer to step 302. Different from that in step 302, the PCC rule includes the association mark information #B that may include the RTP timestamp and the PDU set SN or the synchronization identifier corresponding to the RTP timestamp, or include the PDU set SN offset value. For a description of the association mark information #B, refer to the association mark information #A.

For step 603 and step 604, refer to step 303 and step 304. Details are not described again.

Step 605: An SMF provides an N4 rule for a UPF according to the received PCC rule by using an N4 session establishment or modification procedure. Optionally, the SMF may further provide the N4 rule for the UPF according to a local policy.

The N4 rule may include the association mark information #C. The association mark information #C may include the RTP timestamp and the PDU set SN or the synchronization identifier corresponding to the RTP timestamp, or include the PDU set SN offset value. For a description of the association mark information #C, refer to the association mark information #A.

It should be noted that when a plurality of UPFs (for example, a UPF #1 and a UPF #2 in FIG. 6a and FIG. 6b) perform transmission on the multi-modal service flow on which synchronous transmission needs to be performed, the AF may separately provide, for the plurality of UPFs in a manner shown in step 601 to step 605, the N4 rule that carries the association mark information #C. When the association mark information #C includes the RTP timestamp and the PDU set SN or the synchronization identifier corresponding to the RTP timestamp, N4 rules of the plurality of service flows may carry the same association mark information #C. When the association mark information #C includes the PDU set SN offset value, N4 rules of service flows in the plurality of service flows include PDU set SN offset values corresponding to the service flows. In other words, the association mark information #C in the N4 rules of the plurality of service flows may be different.

For step 606 and step 607, refer to step 306 and step 307. Details are not described again.

After the plurality of UPFs receive downlink data packets, the UPFs may add the PDU set SN or the synchronization identifier to the downlink data packets in a manner of step 608 and step 609, and send, to the access network device, the downlink data packets to which the PDU set SN or the synchronization identifier is added. Step 608 and step 609 are specifically as follows.

Step 608: When the downlink data packets of the multi-modal service arrives at the UPF, the UPF adds the PDU set SN or the synchronization identifier to the downlink data packets according to the N4 rule from the SMF.

In a possible implementation, when the N4 rule includes the association mark information #C, and the association mark information #C includes the RTP timestamp and the PDU set SN or the synchronization identifier corresponding to the RTP timestamp, the UPF determines, based on a timestamp in an RTP header of the downlink data packet, the RTP timestamp in the association mark information #C, and a correspondence between the RTP timestamp in the association mark information #C and the PDU set SN or the synchronization identifier, a PDU set SN or a synchronization identifier corresponding to a PDU set to which the downlink data packet belongs, and adds the determined PDU set SN or the determined synchronization identifier to a GTP-U header of the downlink data packet.

In another possible implementation, when the N4 rule includes the association mark information #C, and the association mark information #C includes the PDU set SN offset value, the UPF determines, based on a PDU set SN in an RTP header of the downlink data packet and the PDU set SN offset value in the association mark information #C, a PDU set SN corresponding to a PDU set to which the downlink data packet belongs, and adds the determined PDU set SN to a GTP-U header of the downlink data packet. For example, if the PDU set SN in the RTP header of the downlink data packet is 10, and the PDU set SN offset value in the association mark information #C is 5, the PDU set SN corresponding to the PDU set to which the downlink data packet belongs is 15.

In another possible implementation, when the N4 rule does not include the association mark information #C, the UPF adds the PDU set SN or the synchronization identifier to the downlink data packet based on an internal implementation. A specific manner of the internal implementation of the UPF is not limited in embodiments of this application, and may be the manner mentioned above, or may be another manner.

In addition, the UPF may further identify the downlink data packets, and determine and mark downlink data packets belonging to a same PDU set.

Step 609: The UPF sends the downlink data packets to the access network device, and correspondingly, the access network device receives the downlink data packets from the UPF.

Step 610: The access network device determines, based on the synchronization indication information #3 from the SMF, the multi-modal service flow that needs to be synchronously processed.

Step 611: The access network device performs synchronous transmission on the PDU sets that carry the same PDU set SN or the same synchronization identifier in the multi-modal service flow.

In the methods shown in FIG. 5 and FIG. 6a and FIG. 6b, the association information to be added in the service flow is indicated to the UPF, to implement synchronous transmission on the plurality of service flows in Scenario 2. In this application, synchronous transmission on the plurality of service flows in Scenario 2 may be implemented in a manner in which the access network device identifies the associated PDU sets and the UPF does not identify the associated PDU sets. The following describes this manner.

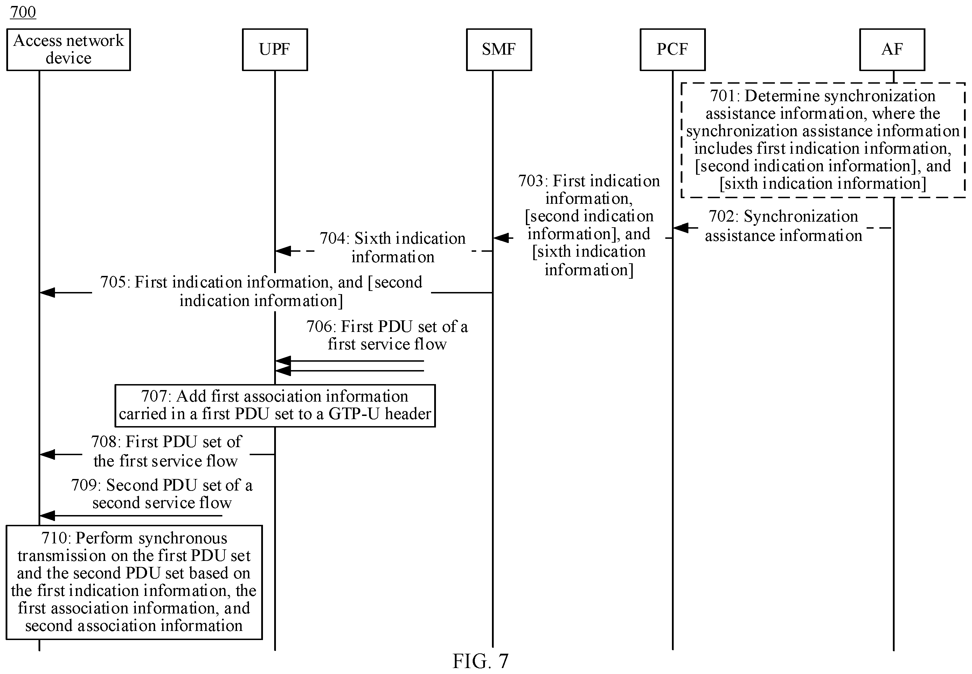

FIG. 7 is a schematic flowchart of a communication method 700 according to an embodiment of this application.

The method 500 may be performed by an access network device, a UPF, an SMF, a PCF, and/or an AF. Unless otherwise specified, the "access network device", the "UPF", the "SMF", the "PCF", or the "AF" may be the access network device, the UPF, the SMF, the PCF, or the AF itself, or may be an apparatus that can support the access network device, the UPF, the SMF, the PCF, or the AF in implementing a function of the access network device, the UPF, the SMF, the PCF, or the AF. For ease of description, the access network device, the UPF, the SMF, the PCF, or the AF is uniformly used for description below.

The method 700 includes at least a part of the following content.

Optionally, in step 701, the AF determines synchronization assistance information.

The synchronization assistance information is used for synchronous transmission on a first service flow and a second service flow. Transmission on the first service flow and the second service flow are performed via different UPFs.

The synchronization assistance information may include first indication information. The first indication information indicates that the first service flow is associated with the second service flow. The first service flow is associated with the second service flow, that is, synchronous transmission needs to be ensured between the first service flow and the second service flow.

Optionally, the synchronization assistance information may further include second indication information. The second indication information indicates a requirement for synchronization between the first service flow and the second service flow.

For descriptions of service flows for which synchronous transmission needs to be ensured, the first indication information, and the second indication information, refer to step 201.

Optionally, the synchronization assistance information may further include sixth indication information. The sixth indication information indicates the UPF to add association information carried in a PDU set to a GTP-U header.

Optionally, in step 702, the AF sends the synchronization assistance information to the PCF, and correspondingly, the PCF receives the synchronization assistance information from the AF.

Step 703: The PCF sends the first indication information to the SMF based on the received synchronization assistance information, and correspondingly, the SMF receives the first indication information from the PCF.

Optionally, when the synchronization assistance information further includes the second indication information or the sixth indication information, the PCF further sends the second indication information or the sixth indication information to the SMF, and correspondingly, the SMF further receives the second indication information or the sixth indication information from the PCF.

Step 704: The SMF sends the sixth indication information to the UPF based on the information received from the PCF, and correspondingly, the UPF receives the sixth indication information from the SMF.

Step 704 is optional.

It should be noted that a form of the sixth indication information sent by the SMF to the UPF may be the same as or different from a form of the sixth indication information received by the SMF from the PCF. This is not limited.

Step 705: The SMF sends the first indication information to the access network device, and correspondingly, the access network device receives the first indication information from the SMF.

Optionally, when the SMF further receives the second indication information, the SMF further sends the second indication information to the access network device, and correspondingly, the access network device further receives the second indication information from the SMF.

It should be noted that a form of the first indication information or the second indication information sent by the SMF to the UPF may be the same as or different from a form of the first indication information or the second indication information received by the SMF from the PCF. This is not limited.

It should be noted that the PCF, the SMF, and the UPF shown in FIG. 7 correspond to the first service flow. The foregoing describes only control plane signaling interaction of the first service flow. For control plane signaling interaction of the second service flow, refer to step 702 to step 705. Details are not described again.

Step 706: The UPF receives a first PDU set of the first service flow.

The first PDU set carries first association information. For example, the first association information is a first PDU set SN or a first RTP timestamp carried in the first PDU set.

Step 707: The UPF adds the first association information to a GTP-U header of the first PDU set.

When the UPF receives the sixth indication information, the UPF may add the first association information to the GTP-U header of the first PDU set based on the sixth indication information.

It should be noted that the foregoing describes only a manner in which the UPF adds the first association information to the first PDU set of the first service flow. For a manner in which a UPF of the second service flow adds second association information to a second PDU set of the second service flow, refer to step 706 and step 707. Details are not described again.

Step 708: The UPF sends the first PDU set of the first service flow to the access network device, and correspondingly, the access network device receives the first PDU set of the first service flow from the UPF.

The first association information used to determine that the first PDU set is associated with the second PDU set is added to the first PDU set.

Step 709: The access network device receives the second PDU set from the UPF of the second service flow.

The second association information used to determine that the first PDU set is associated with the second PDU set is added to the second PDU set.

Step 710: The access network device performs synchronous transmission on the first PDU set and the second PDU set based on the first indication information, the first association information carried in the first PDU set, and the second association information carried in the second PDU set.

In a possible implementation, when the access network device obtains the second indication information from the SMF, the access network device may perform synchronous transmission on the first PDU set and the second PDU set based on the first indication information, the first association information carried in the first PDU set, the second association information carried in the second PDU set, and the second indication information, where synchronous transmission meets a requirement for synchronization indicated by using the second indication information.

An implementation in which the access network device performs synchronous transmission on the first PDU set and the second PDU set based on the first indication information, the first association information carried in the first PDU set, and the second association information carried in the second PDU set is not limited in embodiments of this application.

In a possible implementation, the access network device determines, based on the first indication information, that the first service flow is associated with the second service flow; determines, based on the first association information carried in the first PDU set and the second association information carried in the second PDU set, that the first PDU set is associated with the second PDU set; and performs synchronous transmission on the first PDU set and the second PDU set that are associated.

A specific implementation in which the access network device determines that the first PDU set is associated with the second PDU set is not limited in embodiments of this application. For a specific implementation, refer to a manner in which the UPF determines, based on the third association information and the fourth association information, that the first PDU set is associated with the second PDU set in step 207. Various information required by the access network device may be obtained from the SMF.

In the method 700, the access network device may identify associated PDU sets, the UPF does not identify the associated PDU sets, and the access network device may perform synchronous transmission on the associated PDU sets. This ensures synchronous transmission on a plurality of service flows.

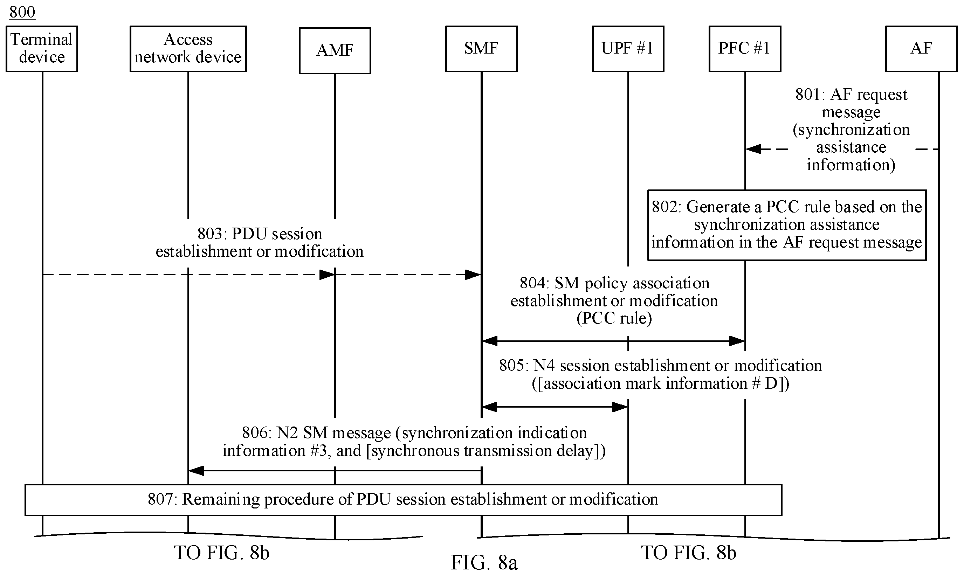

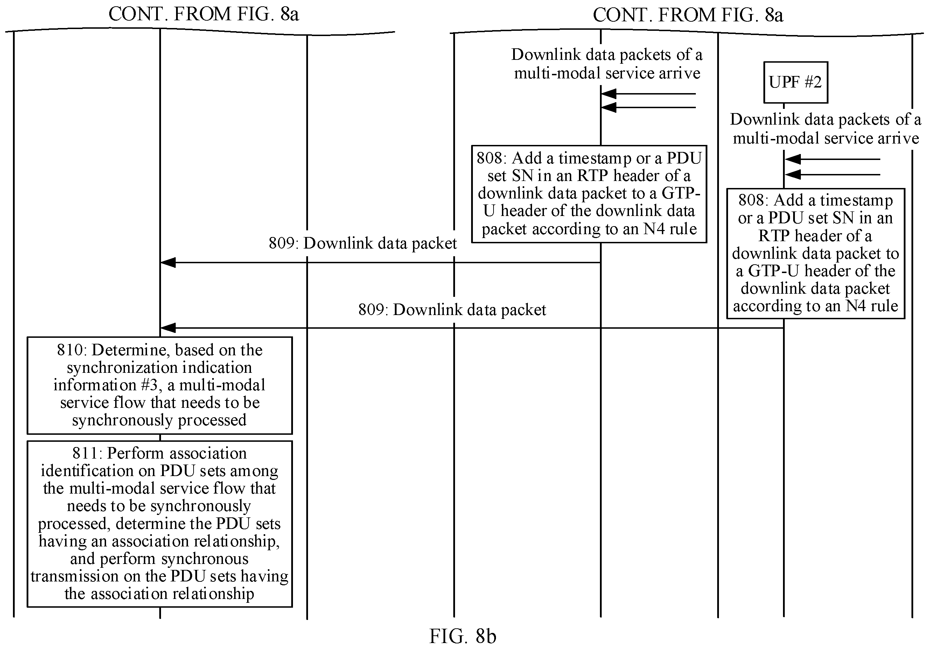

The following describes the method 700 in detail with reference to FIG. 8a and FIG. 8b.

FIG. 8a and FIG. 8b are a schematic flowchart of a communication method 800 according to an embodiment of this application.

Association mark information #D in FIG. 8a and FIG. 8b may correspond to the foregoing sixth indication information, synchronization indication information #3 may correspond to the foregoing first indication information, and a synchronous transmission delay may correspond to the foregoing second indication information.

In the method 800, an access network device may identify, based on synchronization assistance information from an AF, a plurality of service flows that need to be synchronously processed and an association relationship among PDU sets among the plurality of service flows, and perform synchronous transmission on the PDU sets having an association relationship. This ensures synchronous transmission on a multi-modal service flow.

Step 801 to step 804 are the same as step 301 to step 304. For details, refer to step 301 to step 304. Details are not described herein again.

Step 805: An SMF provides an N4 rule for a UPF according to a received PCC rule by using an N4 session establishment or modification procedure. Optionally, the SMF may further provide the N4 rule for the UPF according to a local policy.

Optionally, the N4 rule may include the association mark information #D. The association mark information #D indicates the UPF to add a timestamp or a PDU set SN in an RTP header of a downlink data packet to a GTP-U header of the downlink data packet. For example, when there is only one default marking manner, the N4 rule may not include the association mark information #D.

It should be noted that when a plurality of UPFs (for example, a UPF #1 and a UPF #2 in FIG. 8a and FIG. 8b) perform transmission on the multi-modal service flow on which synchronous transmission needs to be performed, the AF may separately provide, for the plurality of UPFs in a manner shown in step 801 to step 805, the N4 rule that carries the association mark information #D.

Step 806: The SMF sends an N2 session management message to the access network device based on the received PCC rule. Optionally, the SMF may further send the N2 session management message to the access network device according to a local policy.

The N2 session management message includes a PDU set QoS parameter and the synchronization indication information #3. For the PDU set QoS parameter and the synchronization indication information #3, refer to step 306.

Optionally, the N2 session management message may further include association identification information #3. The association identification information #3 indicates a manner for identifying the association relationship among the PDU sets among the multi-modal service flow. For a specific description, refer to the description of the association identification information #1 in step 301. For example, when there is only one default identification manner, the N2 session management message may not include the association identification information #3.

Step 807: Each network element or device performs a remaining procedure of a PDU session establishment or modification procedure. For a specific procedure, refer to the conventional technology, for example, section 4.3.2.1 in TS 23.502. Details are not described herein.

After the plurality of UPFs receive downlink data packets, the UPFs may process the downlink data packets in a manner of step 808 and step 809. Step 808 and step 809 are specifically as follows.

Step 808: When the downlink data packets of the multi-modal service arrive at the UPF, the UPF adds timestamps or PDU set SNs in PTR headers of the downlink data packets to GTP-U headers of the downlink data packets according to the N4 rule from the SMF.

In a possible implementation, when the N4 rule includes the association mark information #D, the UPF may add the timestamp in the PTR header of the downlink data packet to the GTP-U header of the downlink data packet, or add the PDU set SN in the PTR header of the downlink data packet to the GTP-U header of the downlink data packet based on the association mark information #D.

In another possible implementation, when the N4 rule does not include the association mark information #D, the UPF may add, in a default manner or based on an internal implementation, the timestamp in the PTR header of the downlink data packet to the GTP-U header of the downlink data packet, or add the PDU set SN in the PTR header of the downlink data packet to the GTP-U header of the downlink data packet.

In addition, the UPF may further identify the downlink data packets, and determine and mark downlink data packets belonging to a same PDU set.

Step 809: The UPF sends the downlink data packets to the access network device, and correspondingly, the access network device receives the downlink data packets from the UPF.

Step 810: The access network device determines, based on the synchronization indication information #3 from the SMF, the multi-modal service flow that needs to be synchronously processed.

Step 811: The access network device performs association identification on the PDU sets among the multi-modal service flow that needs to be synchronously processed, determines the PDU sets having the association relationship, and performs synchronous transmission on the PDU sets having the association relationship.

For a manner in which the access network device performs association identification on the PDU sets among the multi-modal service flow that needs to be synchronously processed, refer to a manner in which the UPF performs association identification on the PDU sets among the multi-modal service flow that needs to be synchronously processed. A difference is that the access network device performs association identification based on the timestamp or the PSU set SN in the GTP-U header of the downlink data packet.

For a manner in which the access network device performs synchronous transmission on the PDU sets having the association relationship, refer to step 312. Details are not described again.

In addition, the manners shown in FIG. 7 and FIG. 8a and FIG. 8b are also applicable to Scenario 1.

Embodiments of this application further provide a solution in which an application layer ensures synchronous transmission on a plurality of service flows. The following describes the solution.

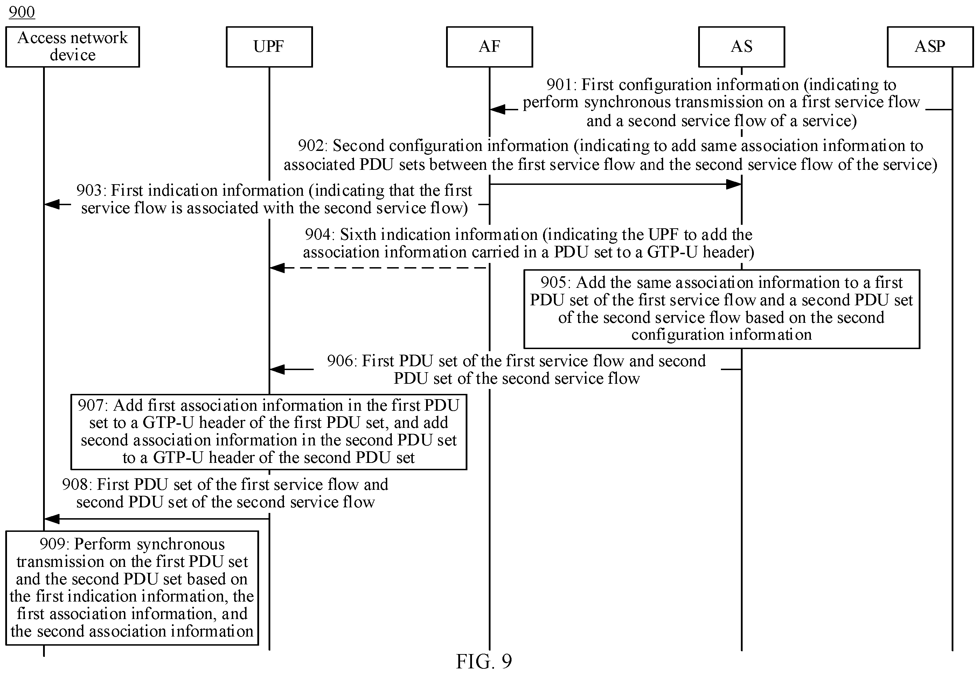

FIG. 9 is a schematic flowchart of a communication method 900 according to an embodiment of this application.

The method 900 may be performed by an access network device, a UPF, an AF, an AS, and/or an application service provider (application service provider, ASP). Unless otherwise specified, the "access network device", the "UPF", the "AF", the "AS", or the "ASP" may be the access network device, the UPF, the AF, the AS, or the ASP, or may be an apparatus that can support the access network device, the UPF, the AF, the AS, or the ASP in implementing a function of the access network device, the UPF, the AF, the AS, or the ASP. For ease of description, the access network device, the UPF, the AF, the AS, or the ASP is uniformly used for description below.

For example, the AF may be a real-time communication (real-time communication, RTC) AF.

It should be noted that the AF, the AS, and the ASP in FIG. 9 may be independent network elements or devices, or may be functional units obtained through logical division on a communication device. This is not limited.

The method 900 includes at least a part of the following content.

Step 901: The ASP determines and sends first configuration information to the AF, and correspondingly, the AF receives the first configuration information from the ASP.

The first configuration information indicates to perform synchronous transmission on a first service flow and a second service flow of a service, or indicates the AF to configure an application server to ensure synchronous transmission among the first service flow and the second service flow, that is, configure the application server to perform corresponding marking processing on associated PDU sets between the first service flow and the second service flow.

Step 902: The AF sends second configuration information to the AS based on the first configuration information, and correspondingly, the AS receives the second configuration information from the AF.

The second configuration information indicates to add same association information to the associated PDU sets between the first service flow and the second service flow.

Optionally, the second configuration information further indicates a synchronization type. The synchronization type is single-user synchronization or multi-user synchronization. The single-user synchronization indicates that the first service flow and the second service flow are service flows of a same user. The multi-user synchronization indicates that the first service flow and the second service flow are service flows of different users.

Step 903: The AF sends first indication information to the access network device, and correspondingly, the access network device receives the first indication information from the AF.

The first indication information indicates that the first service flow is associated with the second service flow.

For an implementation of step 903, refer to steps 701, 702, 703, and 705. Details are not described herein again.

Step 904: The AF sends sixth indication information to the UPF, and correspondingly, the UPF receives the sixth indication information from the AF.

The sixth indication information indicates the UPF to add the association information carried in a PDU set to a GTP-U header.

Step 904 is optional. For an implementation of step 904, refer to steps 701, 702, 703, and 704. Details are not described herein again.

Step 905: The AS adds the same association information to a first PDU set of the first service flow and a second PDU set of the second service flow based on the second configuration information.

The first PDU set is associated with the second PDU set.

Specifically, the AS adds first association information to the first PDU set, and adds second association information to the second PDU set. The first association information is the same as the second association information.

For example, the first association information and the second association information are PDU set SNs or other synchronization identifiers.

Step 906: The AS sends the first PDU set of the first service flow and the second PDU set of the second service flow to the UPF, and correspondingly, the UPF receives the first PDU set of the first service flow and the second PDU set of the second service flow from the AS.

The first PDU set and the second PDU set carry the same association information.

Step 907: The UPF adds the first association information in the first PDU set to a GTP-U header of the first PDU set, and adds the second association information in the second PDU set to a GTP-U header of the second PDU set.

When the UPF receives the sixth indication information, the UPF adds the first association information in the first PDU set to the GTP-U header of the first PDU set, and adds the second association information in the second PDU set to the GTP-U header of the second PDU set based on the sixth indication information. It should be noted that in this case, the UPF needs to strictly copy a PDU set SN of an RTP extension header in the first PDU set to a GTP-U layer of the data packet corresponding to the first PDU set.

Step 908: The UPF sends the first PDU set of the first service flow and the second PDU set of the second service flow to the access network device, and correspondingly, the access network device receives the first PDU set of the first service flow and the second PDU set of the second service flow that are from the UPF.

Step 909: The access network device performs synchronous transmission on the first PDU set and the second PDU set based on the first indication information, the first association information carried in the first PDU set, and the second association information carried in the second PDU set.

For step 909, refer to step 510. Details are not described herein again.

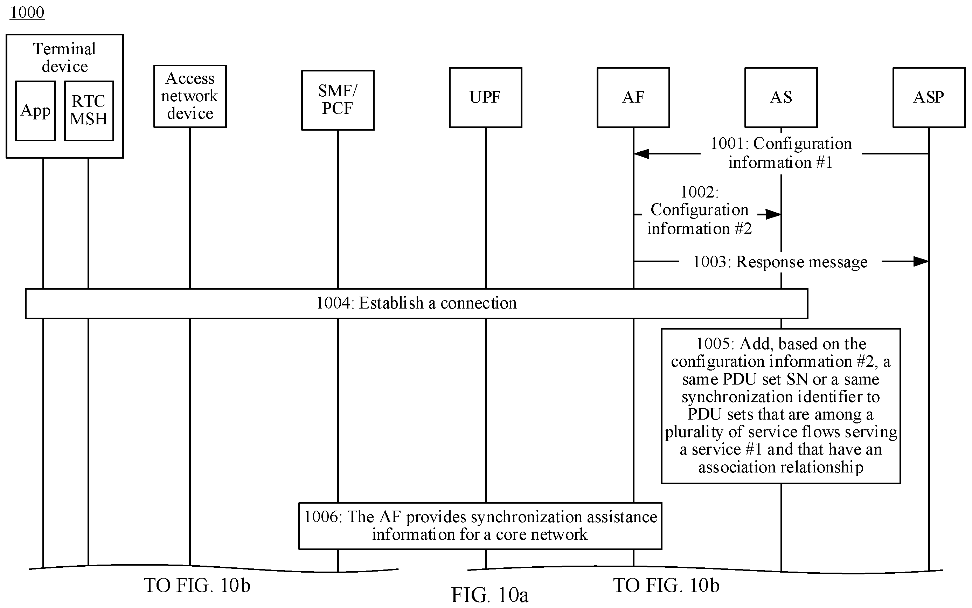

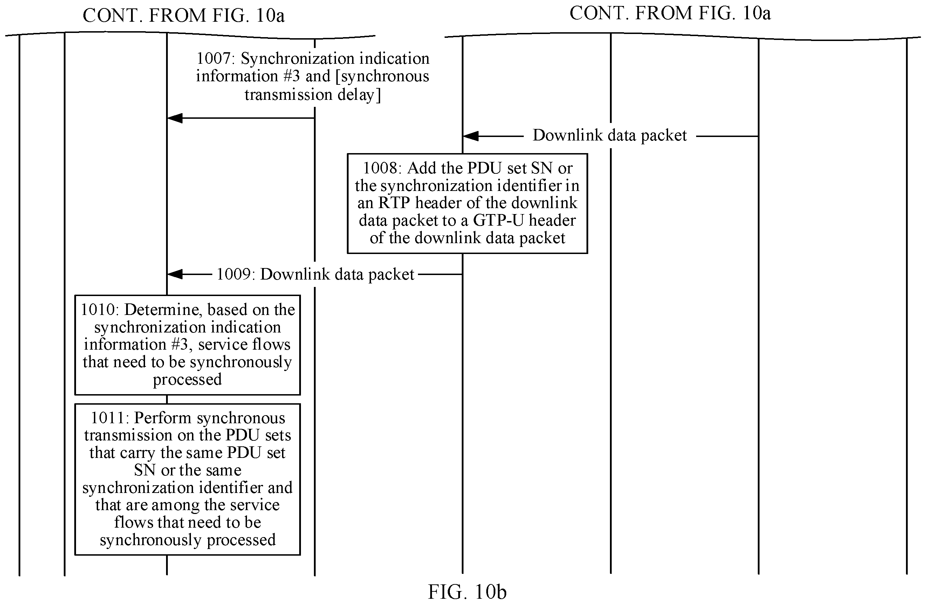

With reference to FIG. 10a and FIG. 10b, the following describes in detail the solution in which the application layer ensures synchronous transmission on the multi-modal service flow.

FIG. 10a and FIG. 10b are a schematic flowchart of a communication method 1000 according to an embodiment of this application.

Configuration information #1 and configuration information #2 in FIG. 10a and FIG. 10b may correspond to the foregoing first configuration information and second configuration information.

In the method 1000, through interaction at an application layer, it is ensured that RTP headers corresponding to PDU sets that are among service flows on which synchronous transmission needs to be performed and that have an association relationship carry a same PDU set SN or a same synchronization identifier. A UPF directly adds the PDU set SN or the synchronization identifier in the PTR headers of downlink data packets to GTP-U headers of the downlink data packets, so that an access network device performs synchronous transmission on the PDU sets having the association relationship. This ensures synchronous transmission on a multi-modal service flow.

Step 1001: An ASP sends the configuration information #1 to an AF, and correspondingly, the AF receives the configuration information #1 from the ASP.

The configuration information #1 is used to configure or create a service #1.

The configuration information #1 in this embodiment of this application may include indication information #1, and the indication information #1 indicates to ensure synchronous transmission among a plurality of service flows serving the service #1. Optionally, the indication information #1 may further indicate that the plurality of service flows belong to a same terminal device or indicate that the plurality of service flows belong to a plurality of terminal devices. In other words, the indication information #1 indicates to ensure synchronous transmission among the plurality of service flows that belong to a same terminal device and that are of the service #1, or indicate to ensure synchronous transmission among the plurality of service flows that belong to a plurality of terminal devices and that are of the service #1. Optionally, the indication information #1 further indicates to identify and mark the PDU sets among the service flows based on the PDU set SNs carried in the downlink data packets.

In a possible implementation, the ASP includes the configuration information #1 in a message used to create a provisioning session (create a provisioning session).

Step 1002: The AF sends configuration information #2 to an AS based on the configuration information #1, and correspondingly, the AS receives the configuration information #2 from the AF.

The configuration information #2 includes indication information #2, and the indication information #2 indicates to add, when the PDU set SN is added to the PDU sets among the plurality of service flows serving the service #1, the same PDU set SN or the same synchronization identifier to the PDU sets that are among the plurality of service flows and that have the association relationship.

Optionally, the configuration information #2 includes a synchronization type, and the synchronization type is single-user synchronization or multi-user synchronization. The single-user synchronization indicates that the plurality of service flows on which synchronous transmission needs to be ensured are a plurality of service flows of a same user. The multi-user synchronization indicates that the plurality of service flows on which synchronous transmission needs to be ensured are a plurality of service flows of a plurality of users.

Step 1003: The AF sends a response message to the ASP, and correspondingly, the ASP receives the response message from the AF.

The response message is used to confirm creation of the service #1.

In a possible implementation, the response message is a message used to confirm creation of the provisioning session (confirm creation of provisioning session).

A configuration procedure of the service #1 of the ASP is completed by using step 1001 to step 1003.

Step 1004: A terminal device establishes a connection to the AS.

Specifically, an application (application, App) in the terminal device starts, and a client establishes the connection, for example, a WebRTC connection, with the AS. Specifically, an RTC media service processing unit (media session handler, MSH) in the terminal device establishes the connection with the AS.

Step 1005: The AS adds, based on the configuration information #2 from the AF, the same PDU set SN or the same synchronization identifier to the PDU sets that are among the plurality of service flows serving the service #1 and that have the association relationship.

Specifically, the AS adds, based on the indication information #2 in the configuration information #2, the same PDU set SN or the same synchronization identifier to the PDU sets that are among the plurality of service flows serving the service #1 and that have the association relationship. Optionally, when the configuration information #2 includes the synchronization type, the AS adds, based on the indication information #2 and the synchronization type, the same PDU set SN or the same synchronization identifier to the PDU sets that are among the plurality of service flows serving the service #1 and that have the association relationship.

Adding, based on the configuration information from the AF, the same PDU set SN or the same synchronization identifier to the PDU sets that are among the plurality of service flows serving the service #1 and that have the association relationship is only an implementation of adding the same PDU set SN or the same synchronization identifier to the PDU sets that are among the plurality of service flows serving the service #1 and that have the association relationship. In another implementation, the AF may further add, based on a local configuration or negotiation with the terminal device, the same PDU set SN or the same synchronization identifier to the PDU sets that are among the plurality of service flows serving the service #1 and that have the association relationship.

Step 1006: The AF provides synchronization assistance information for a core network.

For an implementation of step 1006, refer to step 301 to step 305. A difference is that the synchronization assistance information may not have association identification information #1, a PCC rule generated by a PCF may either not have association identification information #2, and an SMF does not need to provide synchronization indication information #2, association identification information #3, and association mark information #1 for the UPF. In addition, the synchronization assistance information further includes indication information indicating to mark the PDU sets among the service flow based on the PDU set SNs carried in the downlink data packets.

Optionally, the AF may provide indication information #3 for the UPF via a PCF and an SMF, where the indication information #3 indicates the UPF to add the PDU set SN or the synchronization identifier in the RTP header of the downlink data packet to the GTP-U header of the downlink data packet.

Step 1007: The core network provides synchronization indication information #3 and an optional synchronous transmission delay for the access network device. For step 1007, refer to step 306.

Step 1008: When the downlink data packets of the multi-modal service arrive at the UPF, the UPF adds the PDU set SN or the synchronization identifier in the PTR headers of the downlink data packets to the GTP-U headers of the downlink data packets.

Step 1009: The UPF sends the downlink data packets to the access network device, and correspondingly, the access network device receives the downlink data packets from the UPF.

Step 1010: The access network device determines, based on the synchronization indication information #3 from the SMF, the multi-modal service flow that needs to be synchronously processed.

Step 1011: The access network device performs synchronous transmission on the PDU sets that carry the same PDU set SN or the same synchronization identifier and that are among the multi-modal service flow that needs to be synchronously processed. For step 1010, refer to step 312.

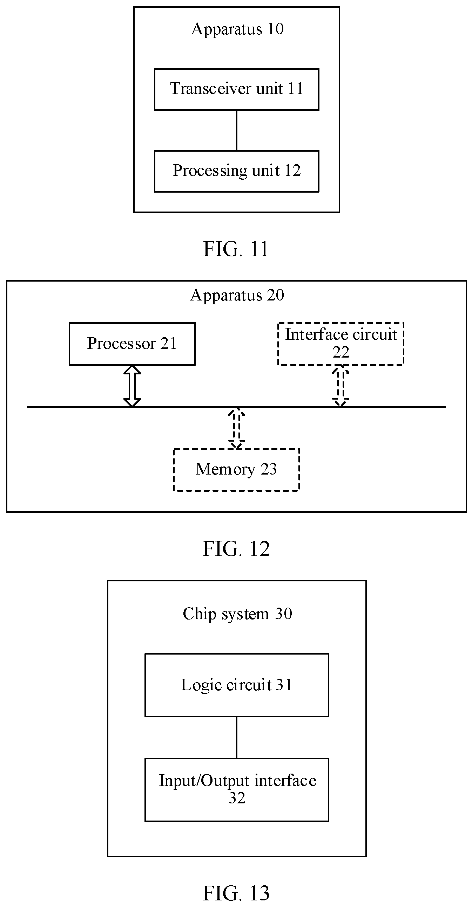

The foregoing describes the method embodiments provided in this application in detail with reference to FIG. 2 to FIG. 10b. The following describes apparatus embodiments of this application with reference to FIG. 11 to FIG. 13.

It may be understood that, to implement functions in the foregoing embodiments, apparatuses in FIG. 11 to FIG. 13 include corresponding hardware structures and/or software modules for performing each function. A person skilled in the art should be easily aware that, in combination with the units and the method steps in the examples described in embodiments disclosed in this application, this application can be implemented by hardware or a combination of hardware and computer software.

FIG. 11 and FIG. 12 are diagrams of structures of possible apparatuses according to embodiments of this application. The apparatuses may be configured to implement functions of the access network device, the user plane function network element, the application function network element, the application service provider, or the application server in the foregoing method embodiments, and therefore can also implement beneficial effect of the foregoing method embodiments.

As shown in FIG. 11, an apparatus 10 includes a transceiver unit 11 and a processing unit 12.

When the apparatus 10 is configured to implement functions of the access network device, the user plane function network element, the application function network element, the application service provider, or the application server in the foregoing method embodiments, the transceiver unit 11 is configured to perform receiving and sending steps of the access network device, the user plane function network element, the application function network element, the application service provider, or the application server, and the processing unit 12 is configured to perform processing steps of the access network device, the user plane function network element, the application function network element, the application service provider, or the application server.

For more detailed descriptions of the transceiver unit 11 and the processing unit 12, refer to the related descriptions in the foregoing method embodiments. Details are not described herein again.

As shown in FIG. 12, an apparatus 20 includes a processing circuit 21. The processing circuit 21 is coupled to a memory 23. The memory 23 is configured to store instructions. When the apparatus 20 is configured to implement the foregoing method, the processing circuit 21 is configured to execute the instructions in the memory 23, to implement a function of the foregoing processing unit 12.

Optionally, the apparatus 20 further includes the memory 23.

Optionally, the apparatus 20 further includes a transceiver circuit 22. The transceiver circuit may be referred to as a communication interface. The processing circuit 21 and the transceiver circuit 22 are coupled to each other. It may be understood that the transceiver circuit 22 may be a transceiver or an input/output interface. When the apparatus 20 is configured to implement the foregoing method, the processing circuit 21 is configured to execute the instructions to implement the function of the foregoing processing unit 12, and the transceiver circuit 22 is configured to implement a function of the foregoing transceiver unit 11.

Optionally, the apparatus 20 may be an access network device, a user plane function network element, an application function network element, an application service provider, or an application server. Correspondingly, the transceiver circuit may be a transceiver.

Optionally, the apparatus 20 may be a chip used in an access network device, a user plane function network element, an application function network element, an application service provider, or an application server. Correspondingly, the transceiver circuit may be an input/output interface.

For example, when the apparatus 20 is the chip used in the access network device, the user plane function network element, the application function network element, the application service provider, or the application server, the chip implements functions of the access network device, the user plane function network element, the application function network element, the application service provider, or the application server in the foregoing method embodiments. The chip receives information from another module (for example, a radio frequency module or an antenna) of the access network device, the user plane function network element, the application function network element, the application service provider, or the application server, where the information is sent by another apparatus to the access network device, the user plane function network element, the application function network element, the application service provider, or the application server; or the chip sends information to another module (for example, a radio frequency module or an antenna) of the access network device, the user plane function network element, the application function network element, the application service provider, or the application server, where the information is sent by the access network device, the user plane function network element, the application function network element, the application service provider, or the application server to another apparatus.

FIG. 13 is a diagram of a chip system 30 according to an embodiment of this application. The chip system 30 (which may also be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, to enable the chip system 30 to implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the access network device, the user plane function network element, the application function network element, the application service provider, or the application server in the foregoing method embodiments.

For example, the logic circuit 31 is configured to implement processing-related operations performed by the access network device, the user plane function network element, the application function network element, the application service provider, or the application server in the foregoing method embodiments. The input/output interface 32 is configured to implement sending-and/or receiving-related operations performed by the access network device, the user plane function network element, the application function network element, the application service provider, or the application server in the foregoing method embodiments.

This application further provides a communication apparatus, including a processing circuit. The processing circuit is coupled to a memory. The memory is configured to store a computer program or instructions and/or data. The processing circuit is configured to execute the computer program or the instructions stored in the memory, or read the data stored in the memory, to perform the methods in the foregoing method embodiments. Optionally, there are one or more processing circuits. Optionally, the communication apparatus includes the memory. Optionally, there are one or more memories. Optionally, the memory and the processing circuit are integrated together or disposed separately.

This application further provides a chip, including a processing circuit. The processing circuit is coupled to a memory. The memory is configured to store a computer program or instructions. The processing circuit is configured to execute the computer program or the instructions stored in the memory, to implement the methods performed by the access network device, the user plane function network element, the application function network element, the application service provider, or the application server in the foregoing method embodiments. The memory may be located in the chip, or may be independent of the chip and located outside the chip. This is not limited herein.

This application further provides a computer-readable storage medium. The computer-readable storage medium stores computer instructions used to implement the methods performed by the access network device, the user plane function network element, the application function network element, the application service provider, or the application server in the foregoing method embodiments.

This application further provides a computer program product, including instructions. When the instructions are executed by a computer, the methods performed by the access network device, the user plane function network element, the application function network element, the application service provider, or the application server in the foregoing method embodiments are implemented.

This application further provides a communication system. The communication system includes at least one of the access network device, the user plane function network element, the application function network element, the application service provider, or the application server in the foregoing embodiments.

For explanations and beneficial effect of related content in any one of the apparatuses provided above, refer to the corresponding method embodiment provided above. Details are not described herein again.

It may be understood that the processing circuit in embodiments of this application may be a processor or a circuit configured to perform a processing operation in a processor. The processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an access network device, a user plane function network element, an application function network element, an application service provider, or an application server. Certainly, the processor and the storage medium may alternatively exist, as discrete components, in an access network device, a user plane function network element, an application function network element, an application service provider, or an application server.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

Unless otherwise stated, meanings of all technical and scientific terms used in the embodiments of this application are the same as those usually understood by a person skilled in the technical field of this application. The terms used in this application are merely intended to describe objectives of the specific embodiments, and are not intended to limit the scope of this application. It should be understood that the foregoing is an example for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

## Claims

1. A communication method, wherein the method comprises:
obtaining, by an access network device, first indication information, wherein the first indication information indicates that a first service flow is associated with a second service flow;
receiving, by the access network device, a first protocol data unit set PDU set of the first service flow and a second PDU set of the second service flow, wherein the first PDU set and/or the second PDU set carry/carries association information, and the association information is used by the access network device to determine that the first PDU set is associated with the second PDU set; and
performing, by the access network device, synchronous transmission on the first PDU set and the second PDU set based on the first indication information and the association information.

2. The method according to claim 1, wherein
the method further comprises: obtaining, by the access network device, second indication information, wherein the second indication information indicates a requirement for synchronization between the first service flow and the second service flow; and
performing, by the access network device, synchronous transmission on the first PDU set and the second PDU set based on the first indication information and the association information comprises: performing, by the access network device, synchronous transmission on the first PDU set and the second PDU set based on the first indication information, the association information, and the second indication information.

3. The method according to claim 2, wherein the requirement for synchronization comprises a maximum value of a difference between transmission delays of associated PDU sets between the first service flow and the second service flow.

4. The method according to any one of claims 1 to 3, wherein performing, by the access network device, synchronous transmission on the first PDU set and the second PDU set based on the first indication information and the association information comprises:
determining, by the access network device based on the first indication information, that the first service flow is associated with the second service flow;
determining, by the access network device based on the association information, that the first PDU set is associated with the second PDU set; and
performing, by the access network device, synchronous transmission on the first PDU set and the second PDU set that are associated.

5. The method according to claim 4, wherein
that the first PDU set and/or the second PDU set carry/carries the association information comprises: the first PDU set carries first association information, and the second PDU set carries second association information; and
determining, by the access network device based on the association information, that the first PDU set is associated with the second PDU set comprises: when the first association information is the same as the second association information, a difference between the first association information and the second association information falls within a threshold range, or a difference between the first association information and the second association information is less than or equal to a threshold, determining, by the access network device, that the first PDU set is associated with the second PDU set.

6. The method according to claim 5, wherein the threshold is from a core network.

7. The method according to claim 4, wherein
the association information indicates an offset value between identification information of the associated PDU sets between the first service flow and the second service flow;
the first PDU set further carries first identification information, and the second PDU set further carries second identification information; and
determining, by the access network device based on the association information, that the first PDU set is associated with the second PDU set comprises: when a difference between the first identification information and the second identification information is equal to the offset value, determining, by the access network device, that the first PDU set is associated with the second PDU set.

8. The method according to claim 4, wherein
the method further comprises: receiving, by the access network device from a user plane function network element or an application function network element by using control plane signaling, an offset value between association information of the associated PDU sets between the first service flow and the second service flow;
that the first PDU set and/or the second PDU set carry/carries the association information comprises: the first PDU set carries first association information, and the second PDU set carries second association information; and
determining, by the access network device based on the association information, that the first PDU set is associated with the second PDU set comprises: when a difference between the first association information and the second association information is equal to the offset value, determining, by the access network device, that the first PDU set is associated with the second PDU set.

9. The method according to any one of claims 1 to 8, wherein the association information is comprised in a general packet radio service tunneling protocol-user plane GTP-U header of a PDU set.

10. The method according to any one of claims 1 to 9, wherein
the first indication information comprises an identifier of the first service flow and an identifier of the second service flow; or
the first indication information comprises an identifier of the first service flow, an identifier of a first session to which the first service flow belongs, an identifier of a first terminal device to which the first session belongs, an identifier of the second service flow, an identifier of a second session to which the second service flow belongs, and/or an identifier of a second terminal device to which the second session belongs.

11. A communication method, wherein the method comprises:
obtaining, by a user plane function network element, first indication information, wherein the first indication information indicates that a first service flow is associated with a second service flow;
receiving, by the user plane function network element, a first protocol data unit set PDU set of the first service flow and a second PDU set of the second service flow, wherein the first PDU set carries third association information, the second PDU set carries fourth association information, and the third association information and the fourth association information are used by the user plane function network element to determine that the first PDU set is associated with the second PDU set;
adding, by the user plane function network element, association information to the first PDU set and/or the second PDU set based on the first indication information, the third association information, and the fourth association information, wherein the association information is used by an access network device to determine that the first PDU set is associated with the second PDU set; and
sending, by the user plane function network element, the first PDU set and the second PDU set to the access network device.

12. The method according to claim 11, wherein adding, by the user plane function network element, the association information to the first PDU set and/or the second PDU set based on the first indication information, the third association information, and the fourth association information comprises:
determining, by the user plane function network element based on the first indication information, that the first service flow is associated with the second service flow;
determining, by the user plane function network element based on the third association information and the fourth association information, that the first PDU set is associated with the second PDU set; and
adding, by the user plane function network element, the association information to the first PDU set and/or the second PDU set.

13. The method according to claim 12, wherein determining, by the user plane function network element based on the third association information and the fourth association information, that the first PDU set is associated with the second PDU set comprises:
when the third association information is the same as the fourth association information, a difference between the third association information and the fourth association information is less than or equal to a threshold, a difference between the third association information and the fourth association information falls within a threshold range, or a difference between the third association information and the fourth association information is equal to an offset value, determining, by the user plane function network element, that the first PDU set is associated with the second PDU set, wherein the offset value is an offset value between association information of associated PDU sets between the first service flow and the second service flow.

14. The method according to claim 13, wherein the threshold and/or the offset value are/is from a session management function network element.

15. The method according to any one of claims 11 to 14, wherein adding, by the user plane function network element, the association information to the first PDU set and/or the second PDU set based on the first indication information, the third association information, and the fourth association information comprises:
adding, by the user plane function network element, first association information to the first PDU set, and adding second association information to the second PDU set based on the first indication information, the third association information, and the fourth association information, wherein the first association information is the same as the second association information.

16. The method according to any one of claims 11 to 14, wherein
the association information indicates an offset value between identification information of the associated PDU sets between the first service flow and the second service flow; and
the method further comprises: adding, by the user plane function network element, first identification information to the first PDU set, and adding second identification information to the second PDU set, wherein the first identification information is the same as the third association information, and the second identification information is the same as the fourth association information.

17. The method according to claim 16, wherein the method further comprises:
determining, by the user plane function network element, the offset value based on the third association information and the fourth association information.

18. The method according to any one of claims 11 to 17, wherein the method further comprises:
obtaining, by the user plane function network element, third indication information, wherein the third indication information indicates the user plane function network element to identify the associated PDU sets.

19. The method according to claim 18, wherein the third indication information further indicates a manner for the user plane function network element to identify the associated PDU sets, and the manner is any one of the following manners: an identification manner based on a timestamp or an identification manner based on a PDU set sequence number SN.

20. The method according to any one of claims 11 to 19, wherein the method further comprises:
obtaining, by the user plane function network element, fourth indication information, wherein the fourth indication information indicates the user plane function network element to mark the associated PDU sets.

21. The method according to any one of claims 11 to 20, wherein
the first indication information comprises an identifier of the first service flow and an identifier of the second service flow; or
the first indication information comprises an identifier of the first service flow, an identifier of a first session to which the first service flow belongs, an identifier of a first terminal device to which the first session belongs, an identifier of the second service flow, an identifier of a second session to which the second service flow belongs, and/or an identifier of a second terminal device to which the second session belongs.

22. A communication method, wherein the method comprises:
obtaining, by a user plane function network element, fifth indication information, wherein the fifth indication information indicates association information to be added by the user plane function network element to a first service flow, and the association information is used by an access network device to determine associated protocol data unit sets PDU sets between the first service flow and a second service flow;
receiving, by the user plane function network element, a first PDU set of the first service flow;
adding, by the user plane function network element, the association information to the first PDU set based on the fifth indication information; and
sending, by the user plane function network element, the first PDU set to the access network device.

23. The method according to claim 22, wherein
the fifth indication information comprises a third timestamp corresponding to the first service flow and a third PDU set sequence number SN corresponding to the third timestamp, and the association information to be added by the user plane function network element to the first PDU set is a first PDU set SN; and
adding the association information to the first PDU set based on the fifth indication information comprises: adding the first PDU set SN to the first PDU set based on the third timestamp, the third PDU set SN, and a first timestamp carried in the first PDU set.

24. The method according to claim 23, wherein
the method further comprises: obtaining period information, wherein the period information indicates a time interval between two adjacent PDU sets of the first service flow; and
adding the second PDU set SN to the first PDU set based on the third timestamp, the third PDU set SN, and the first timestamp carried in the first PDU set comprises: adding the first PDU set SN to the first PDU set based on the third timestamp, the third PDU set SN, the first timestamp, and the period information.

25. The method according to claim 22, wherein
the fifth indication information comprises a PDU set sequence number SN offset value corresponding to the first service flow, and the association information to be added by the user plane function network element to the first PDU set is a first PDU set SN; and
adding the association information to the first PDU set based on the fifth indication information comprises: adding the first PDU set SN to the PDU set based on the offset value and a fourth PDU set SN carried in the first PDU set, wherein the first PDU set SN is offset by the offset value relative to the fourth PDU set SN.

26. A communication method, wherein the method comprises:
obtaining, by a user plane function network element and an access network device, first indication information, wherein the first indication information indicates that a first service flow is associated with a second service flow;
receiving, by the user plane function network element, a first protocol data unit set PDU set of the first service flow and a second PDU set of the second service flow, wherein the first PDU set carries third association information, the second PDU set carries fourth association information, and the third association information and the fourth association information are used by the user plane function network element to determine that the first PDU set is associated with the second PDU set;
adding, by the user plane function network element, association information to the first PDU set and/or the second PDU set based on the first indication information, the third association information, and the fourth association information, wherein the association information is used by the access network device to determine that the first PDU set is associated with the second PDU set;
sending, by the user plane function network element, the first PDU set and the second PDU set to the access network device; and
performing, by the access network device, synchronous transmission on the first PDU set and the second PDU set based on the first indication information and the association information carried in the first PDU set and/or the second PDU set.

27. A communication method, wherein the method comprises:
obtaining, by an access network device, first indication information, wherein the first indication information indicates that a first service flow is associated with a second service flow;
obtaining, by a user plane function network element, fifth indication information, wherein the fifth indication information indicates association information to be added by the user plane function network element to the first service flow and/or association information to be added by the user plane function network element to the second service flow, and the association information is used to determine associated protocol data unit sets PDU sets between the first service flow and the second service flow;
receiving, by the user plane function network element, a first PDU set of the first service flow and a second PDU set of the second service flow;
adding the association information to the first PDU set and/or the second PDU set based on the fifth indication information;
sending, by the user plane function network element, the first PDU set and the second PDU set to the access network device; and
performing, by the access network device, synchronous transmission on the first PDU set and the second PDU set based on the first indication information and the association information carried in the first PDU set and/or the second PDU set.

28. A communication apparatus, comprising a module or a unit configured to perform the method according to any one of claims 1 to 27.

29. A communication apparatus, comprising a processor and an interface circuit, wherein the interface circuit is configured to receive a signal from a communication apparatus other than the communication apparatus and transmit the signal to the processor or send a signal from the processor to a communication apparatus other than the communication apparatus, and the processor is configured to implement the method according to any one of claims 1 to 27 through a logic circuit or by executing code instructions.

30. A chip, comprising a processor, wherein the processor is coupled to a memory, the memory is configured to store a computer program, and the processor is configured to execute the computer program stored in the memory, to implement the method according to any one of claims 1 to 27.

31. A computer-readable storage medium, wherein the storage medium stores a computer program or instructions, and when the computer program or the instructions are executed by a communication apparatus, the method according to any one of claims 1 to 27 is implemented.

32. A computer program product, comprising a computer program, wherein when the computer program is run, the method according to any one of claims 1 to 27 is implemented.

33. A communication system, comprising a communication apparatus configured to perform the method according to any one of claims 1 to 10 and a communication apparatus configured to perform the method according to any one of claims 11 to 21, or comprising a communication apparatus configured to perform the method according to any one of claims 1 to 10 and a communication apparatus configured to perform the method according to any one of claims 22 to 25.
